# EUROPEAN PATENT APPLICATION

(11) **EP 4 611 355 A1**
(43) Date of publication of application: **03.09.2025**
(21) Application number: 25160447.6
(22) Date of filing: 27.02.2025
(51) Int. Cl.: H04M 1/22, H04M 1/02

(54) **ELECTRONIC APPARATUS WITH ADJUSTABLE ILLUMINATION, CONTROL METHOD, AND PROGRAM**

(30) Priority: 01.03.2024 JP 2024031550
(71) Applicant: FUJIFILM Corporation, Tokyo 106-8620 (JP)
(72) Inventor: TANAKA, Yasushi, Saitama (JP); AIDA, Yukari, Saitama (JP); KAYA, Akimasa, Saitama (JP)
(74) Representative: Meissner Bolte Partnerschaft mbB

(57) **Abstract**

Provided are an electronic apparatus, a control method, and a program, which are capable of making a visual recognition state of light transmitted through an exterior body close to a state intended in advance.

An electronic apparatus includes: an exterior body; a light-emitting unit that is provided inside the exterior body and that is configured to emit light to an outside through the exterior body; and a processor, in which the processor acquires exterior body information that is information on a state of the exterior body, and execute control of adjusting a light emission aspect of the light-emitting unit based on the acquired exterior body information.

## Description

### BACKGROUND OF THE INVENTION

### 1. Field of the Invention

The present disclosed technology relates to an electronic apparatus, a control method, and a program.

### 2. Description of the Related Art

JP2020-55282A discloses a portable image forming apparatus comprising: a recording unit that records an image on a recording material; an apparatus main body that accommodates the recording unit therein; an attachable/detachable unit that is configured to be attachable to and detachable from the apparatus main body and that is electrically connected to the apparatus main body; a pressurizing unit that presses the attachable/detachable unit in a direction in which a unit-side connection portion of the mounted attachable/detachable unit faces a main body-side connection portion, the direction being orthogonal to an attachment/detachment direction of the attachable/detachable unit; and a movable member that holds the pressurizing unit and that is movable between a first position closest to the main body-side connection portion and a second position farthest from the main body-side connection portion.

JP3196184Y discloses a battery in which an electronic circuit board in which a charging/discharging module comprising a secondary battery is mounted is accommodated in a housing consisting of a front case and a rear case, the secondary battery is charged by an external power supply, power of the secondary battery can be supplied to a portable electronic apparatus, a decorative LED lamp is mounted on the electronic circuit board, at least any one of the front case or the rear case is configured to allow transmission of light emitted from the decorative LED lamp, and the decorative LED lamp is faced inside at least any one of the front case or the rear case configured to allow the transmission of the light emitted from the decorative LED lamp.

JP2012-34448A discloses a portable electronic apparatus comprising: a housing; a power generation unit that is disposed on an outer surface of the housing and that generates power via photoelectric conversion based on light incident from the outside; an ultraviolet detection unit that detects illuminance of ultraviolet rays included in the light; a secondary battery that is chargeable with the power generated by the power generation unit; a posture detection unit that is capable of detecting a posture of the housing; a controller that controls a charging state in which the secondary battery is charged with the power generated by the power generation unit; a display unit and an operation unit that are disposed in the housing and that include a light source unit; and a determination unit that determines a chargeable state in accordance with the illuminance of the ultraviolet rays detected by the ultraviolet detection unit and the posture of the housing detected by the posture detection unit, in which the controller performs control of charging the secondary battery and driving the light source unit in a suppressed manner in a case in which the determination unit determines that the state is the chargeable state, and performs control of normally driving the light source unit in a case in which the determination unit determines that the state is not the chargeable state.

JP2012-156364A discloses a portable electronic apparatus comprising: a falling detection unit that detects that the portable electronic apparatus has fallen into water; a light emitter that is provided inside a housing; and a light emission control circuit that causes the light emitter to emit light in a case in which the falling detection unit detects the fall into water, in which a translucent portion is provided in a part of the housing.

### SUMMARY OF THE INVENTION

In a case in which a light-emitting unit is provided inside an exterior body of the electronic apparatus, a state in which the light emitted from the inside of the exterior body is visually recognized may be changed from a state intended in advance depending on a state of the exterior body.

Therefore, the present disclosed technology provides an electronic apparatus, a control method, and a program, which are capable of making a visual recognition state of light transmitted through an exterior body close to a state intended in advance.

A first aspect according to the present disclosed technology relates to an electronic apparatus comprising: an exterior body; a light-emitting unit that is provided inside the exterior body and that is configured to emit light to an outside through the exterior body; and a processor, in which the processor acquires exterior body information that is information on a state of the exterior body, and executes control of adjusting a light emission aspect of the light-emitting unit based on the acquired exterior body information.

A second aspect according to the present disclosed technology relates to the electronic apparatus according to the first aspect, in which the exterior body information includes exterior body color information that is information on a color of the exterior body, and the control includes control of adjusting a light emission color of the light-emitting unit based on the exterior body color information.

A third aspect according to the present disclosed technology relates to the electronic apparatus according to the first aspect, in which the exterior body information includes transmitted light color information that is information on a change in a color of the light transmitted through the exterior body, and the control includes control of adjusting a light emission color of the light-emitting unit based on the transmitted light color information.

A fourth aspect according to the present disclosed technology relates to the electronic apparatus according to the first aspect, in which the exterior body information includes transmitted light intensity information that is information on a change in intensity of the light transmitted through the exterior body, and the control includes control of adjusting a light emission amount of the light-emitting unit based on the transmitted light intensity information.

A fifth aspect according to the present disclosed technology relates to the electronic apparatus according to the first aspect, in which the processor further acquires ambient light information that is information on ambient light of a periphery of the exterior body, and the control includes control of adjusting the light emission aspect of the light-emitting unit based on the acquired ambient light information.

A sixth aspect according to the present disclosed technology relates to the electronic apparatus according to the fifth aspect, in which the ambient light information includes ambient light intensity information indicating brightness of the periphery of the exterior body, and the control includes control of adjusting a light emission amount of the light-emitting unit based on the ambient light intensity information.

A seventh aspect according to the present disclosed technology relates to the electronic apparatus according to the fifth aspect, in which the ambient light information includes ambient light color information indicating a color of the ambient light of the periphery of the exterior body, and the control includes control of adjusting a light emission color of the light-emitting unit based on the ambient light color information.

An eighth aspect according to the present disclosed technology relates to the electronic apparatus according to the first aspect, in which the exterior body information includes information on a state of a movable portion of the exterior body, and the control includes control of adjusting the light emission aspect of the light-emitting unit based on the information on the state of the movable portion.

A ninth aspect according to the present disclosed technology relates to the electronic apparatus according to the eighth aspect, in which the movable portion is a cover member that is provided at a position facing the light-emitting unit in the exterior body, and the control includes control of adjusting a light emission amount of the light-emitting unit in accordance with an open/close state of the cover member.

A tenth aspect according to the present disclosed technology relates to the electronic apparatus according to the first aspect, in which the exterior body information includes posture information indicating a posture of the electronic apparatus, and the control includes control of adjusting the light emission aspect of the light-emitting unit based on the posture information.

An eleventh aspect according to the present disclosed technology relates to the electronic apparatus according to any one of the second to ten aspects, in which the exterior body information includes operation state information indicating an operation state of the electronic apparatus, and the control includes control of adjusting the light emission aspect of the light-emitting unit based on the operation state information.

A twelfth aspect according to the present disclosed technology relates to the electronic apparatus according to the first aspect, in which a stripe pattern consisting of periodic recessed and protruding portions is formed on a front surface of the exterior body.

Athirteenth aspect according to the present disclosed technology relates to the electronic apparatus according to the first aspect, in which the exterior body has a display unit that shows a character, a symbol, and/or a figure by using a difference in a three-dimensional shape with a periphery on a front surface, and the display unit is formed at a position facing the light-emitting unit.

A fourteenth aspect according to the present disclosed technology relates to the electronic apparatus according to the first aspect, in which a coating film is formed on an outer side of the exterior body, and a thickness of the coating film in a region through which the light from the light-emitting unit is transmitted is set to be less than a thickness of the coating film in another region.

A fifteenth aspect according to the present disclosed technology relates to the electronic apparatus according to the first aspect, in which the light-emitting unit includes an LED light source, and the control includes control of adjusting a light emission aspect of the LED light source.

A sixteenth aspect according to the present disclosed technology relates to a control method of an electronic apparatus including an exterior body and a light-emitting unit that is provided inside the exterior body and that is configured to emit light to an outside through the exterior body, the control method comprising: acquiring exterior body information that is information on a state of the exterior body; and executing control of adjusting a light emission aspect of the light-emitting unit based on the acquired exterior body information.

A seventeenth aspect according to the present disclosed technology relates to a program of controlling an electronic apparatus including an exterior body and a light-emitting unit that is provided inside the exterior body and that is configured to emit light to an outside through the exterior body, the program causing a computer to execute a process comprising: acquiring exterior body information that is information on a state of the exterior body; and executing control of adjusting a light emission aspect of the light-emitting unit based on the acquired exterior body information.

### BRIEF DESCRIPTION OF THE DRAWINGS

Fig. 1 is a conceptual diagram illustrating an example of a configuration of an electronic apparatus according to an embodiment.
Fig. 2 is a plan view illustrating an example of the configuration of the electronic apparatus according to the embodiment.
Fig. 3 is a cross-sectional view illustrating an example of the configuration of the electronic apparatus according to the embodiment.
Fig. 4 is a conceptual diagram illustrating an example of the configuration of the electronic apparatus according to the embodiment.
Fig. 5 is a conceptual diagram illustrating an example of the configuration of the electronic apparatus according to the embodiment.
Fig. 6 is a conceptual diagram illustrating an example of the configuration of the electronic apparatus according to the embodiment.
Fig. 7 is a cross-sectional view illustrating an example of the configuration of the electronic apparatus according to the embodiment.
Fig. 8 is a side view illustrating an example of the configuration of the electronic apparatus according to the embodiment.
Fig. 9 is a block diagram illustrating an example of a hardware configuration of an electrical system of the electronic apparatus according to the embodiment.
Fig. 10 is a conceptual diagram illustrating an example of main functions of a processor of the electronic apparatus according to the embodiment.
Fig. 11 is a flowchart illustrating an example of light emission control processing according to the embodiment.
Fig. 12 is a conceptual diagram illustrating an example of the main functions of the processor of the electronic apparatus according to the embodiment.
Fig. 13 is a conceptual diagram illustrating an example of the main functions of the processor of the electronic apparatus according to the embodiment.
Fig. 14 is a conceptual diagram illustrating an example of the main functions of the processor of the electronic apparatus according to the embodiment.
Fig. 15 is a conceptual diagram illustrating an example of the main functions of the processor of the electronic apparatus according to the embodiment.
Fig. 16 is a conceptual diagram illustrating an example of the main functions of the processor of the electronic apparatus according to the embodiment.

### DESCRIPTION OF THE PREFERRED EMBODIMENTS

An example of an embodiment of an electronic apparatus 10 according to the present disclosed technology will be described with reference to the accompanying drawings.

Hereinafter, for convenience of description, a width direction, a front-rear direction, and a height direction of the electronic apparatus 10 are indicated by three arrows X, Y, and Z. First, the height direction is indicated by the arrow Z, a direction indicated by the arrow Z is referred to as an up direction of the electronic apparatus 10, and an opposite direction thereof is referred to as a down direction. The width direction is indicated by the arrow X orthogonal to the arrow Z, a direction indicated by the arrow X is referred to as a right direction of the electronic apparatus 10, and an opposite direction thereof is referred to as a left direction. The front-rear direction is indicated by the arrow Y in a direction orthogonal to the arrow Z and the arrow X, a direction indicated by the arrow Y is referred to as a front direction of the electronic apparatus 10, and an opposite direction thereof is referred to as a rear direction. In addition, in the following description, the expressions using the side, such as an upper side, a lower side, a left side, a right side, a front side, and a rear side, have the same meaning as the expressions using the direction.

### First Embodiment

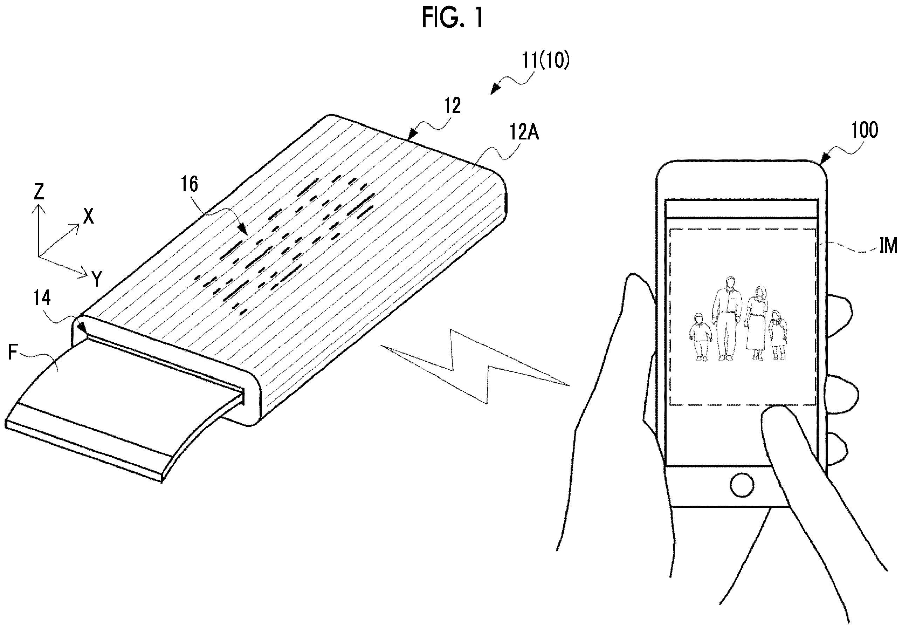

As illustrated in Fig. 1 as an example, the electronic apparatus 10 has, for example, a printer function. The electronic apparatus 10 is, for example, a portable electronic apparatus. The electronic apparatus 10 is, for example, a mobile printer. Hereinafter, for convenience of description, the embodiment will be described with the mobile printer 11 as an example. The electronic apparatus 10 is an example of an "electronic apparatus" according to the present disclosed technology.

The mobile printer 11 can communicate with an external device. In the example illustrated in Fig. 1, the mobile printer 11 can communicate with a smartphone 100. Examples of a communication method include wireless communication (for example, Bluetooth (registered trademark)), but wired communication may be used. The mobile printer 11 receives image data IM transmitted from the smartphone 100 and prints a subject image shown by the received image data IM on a film F. The film F is, for example, a film containing a photosensitive material (so-called instant film).

The mobile printer 11 comprises an exterior body 12. In the example illustrated in Fig. 1, the exterior body 12 has a rectangular parallelepiped-shaped housing structure having a longitudinal direction in an X direction. The exterior body 12 accommodates, inside, electronic components and the like for implementing the printer function and other functions of the mobile printer 11. In addition, for example, the printed film F is discharged from an outlet 14 provided on a left side surface of the exterior body 12. The exterior body 12 is an example of an "exterior body" according to the present disclosed technology.

A display unit 16 is formed on the exterior body 12. The display unit 16 shows at least one of a character, a symbol, or a figure on a front surface of the exterior body 12. In the example illustrated in Fig. 1, the display unit 16 is formed on an upper surface 12A of the exterior body 12. In the example illustrated in Fig. 1, the display unit 16 shows the characters "ABCD". Examples of the content shown by the display unit 16 include a company name, a product name, a personal name, a catchphrase, a logo mark, and/or a pictogram. In addition, examples of the content shown by the display unit 16 may include a symbol (for example, an arrow indicating a film discharge direction) or a figure (for example, a mark of a power button) for describing an operation of the mobile printer 11. The display unit 16 is an example of a "display unit" according to the present disclosed technology.

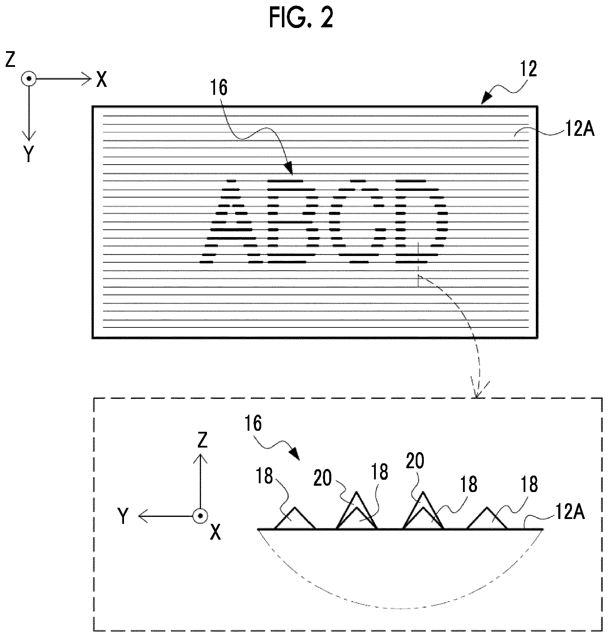

As illustrated in Fig. 2 as an example, a linear stripe pattern is formed on the exterior body 12 along the longitudinal direction (here, the X direction). Specifically, the stripe pattern consisting of periodic recessed and protruding portions is formed on the front surface of the exterior body 12. Hereinafter, the stripe pattern is described with the upper surface 12A on the front surface of the exterior body 12 as an example, but it goes without saying that the stripe pattern may be formed on other surfaces of the exterior body 12 in the same manner.

In a case of being viewed from a cross section having the longitudinal direction as a normal direction (in a cross-sectional view), protruding portions 18 are periodically formed on the upper surface 12A of the exterior body 12. In a cross-sectional view, the protruding portion 18 has a triangular shape, and a portion at a vertex is continuous along the longitudinal direction, whereby the linear stripe pattern is formed. As described above, the protruding portions 18 are periodically present, and thus the stripe pattern consisting of periodic recessed and protruding portions is formed.

Here, the display unit 16 shows at least one of the character, the symbol, or the figure due to a difference in a three-dimensional shape from a periphery on the front surface of the exterior body 12. In the example illustrated in Fig. 2, the display unit 16 protrudes to an outer side (here, an upper side) of the exterior body 12 rather than the periphery. As a result, the difference in the three-dimensional shape from the periphery is generated. Specifically, in the above-described stripe pattern, a portion corresponding to the display unit 16 is the protruding portion 20 that is higher than the protruding portion 18 present on the periphery. That is, in the example illustrated in Fig. 2, the difference in the three-dimensional shape is a difference in a height of the protruding portion of the stripe pattern.

The difference in the three-dimensional shape between the display unit 16 and the other region causes a difference in a way of reflecting natural light (here, ambient light). In this way, the display unit 16 can be visually recognized due to the difference in the three-dimensional shape from the periphery (here, the characters "ABCD" appear to be floating).

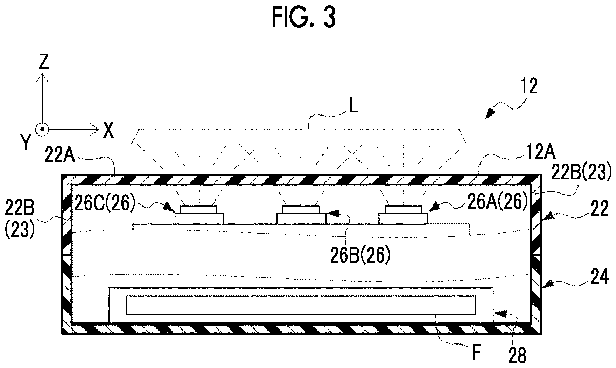

As illustrated in Fig. 3 as an example, the exterior body 12 includes a first member 22 and a second member 24 disposed adjacent to the first member 22. The first member 22 is, for example, a cover member that constitutes the upper side of the exterior body 12, and the second member 24 is, for example, a cover member that constitutes a lower side of the exterior body 12. The mobile printer 11 comprises a light-emitting unit 26 inside the exterior body 12. The light-emitting unit 26 is provided at a position facing the display unit 16 inside the exterior body 12. The light-emitting unit 26 can emit emission light L to the outside through the exterior body 12. The emission light L is, for example, light including a wavelength in a visible light range. The light-emitting unit 26 is an example of a "light-emitting unit" according to the present disclosed technology.

In the example illustrated in Fig. 3, the light-emitting unit 26 includes, for example, light-emitting diode (LED) light sources 26A to 26C. The LED light sources 26A to 26C are linearly arranged in an order from a right side inside the exterior body 12. Here, the form example is described in which the three LED light sources 26A to 26C are disposed, but this is merely an example, and two or less or four or more LED light sources may be used. In addition, a disposition interval of the LED light sources, positions at which the LED light sources are disposed, and a disposition method (for example, disposing the LED light sources in a circular shape or disposing the LED light sources at positions of vertices of a quadrangle) can also be set as appropriate. In addition, each of the LED light sources 26A to 26C includes RGB light-emitting elements, and a color and a light amount of the emission light L can be changed by controlling a light emission aspect of each light-emitting element. The LED light sources 26A to 26C are examples of an "LED light source" according to the present disclosed technology.

In addition, in the example illustrated in Fig. 3, the light-emitting unit 26 is accommodated inside the first member 22 that constitutes an upper portion of the exterior body 12. The first member 22 comprises a contact portion 23 as a portion in contact with the second member 24. Specifically, the first member 22 includes a bottom plate portion 22A as a plate-shaped portion having a plate thickness direction in the height direction, and a side wall portion 22B that is erected from a peripheral edge of the bottom plate portion 22A along the height direction. Here, the side wall portion 22B is erected toward the second member 24 in a state in which the first member 22 and the second member 24 are combined. Although the details will be described later, the side wall portion 22B is in contact with the second member 24, and the side wall portion 22B also functions as the contact portion 23.

The light-emitting unit 26 is provided at a position facing an inner surface of the bottom plate portion 22A. The emission light L from the light-emitting unit 26 is transmitted through the bottom plate portion 22A and is emitted to the outside of the exterior body 12. Here, the transmission of the emission light L includes that the emission light L is scattered in the exterior body 12 and is emitted to the outside. Here, since the exterior body 12 is formed of a resin material, the emission light L is scattered in a case of passing through the bottom plate portion 22A, and an emission range of the emission light L to the outside is widened.

In addition, a space 28 in which the film F is accommodatable is formed in the second member 24 constituting a lower portion of the exterior body 12. The film F is accommodated inside the space 28 via a cover (not illustrated). Here, for convenience of description, one film F is illustrated, but it goes without saying that a plurality of films F may be accommodated in the space 28. The space 28 can be open with respect to a lower surface of the exterior body 12. In other words, the light-emitting unit 26 is provided at a position facing the display unit 16 formed on a surface (here, the upper surface) of the exterior body 12 opposite to a side on which the film F is accommodated. The second member 24 also has the same shape as the first member 22.

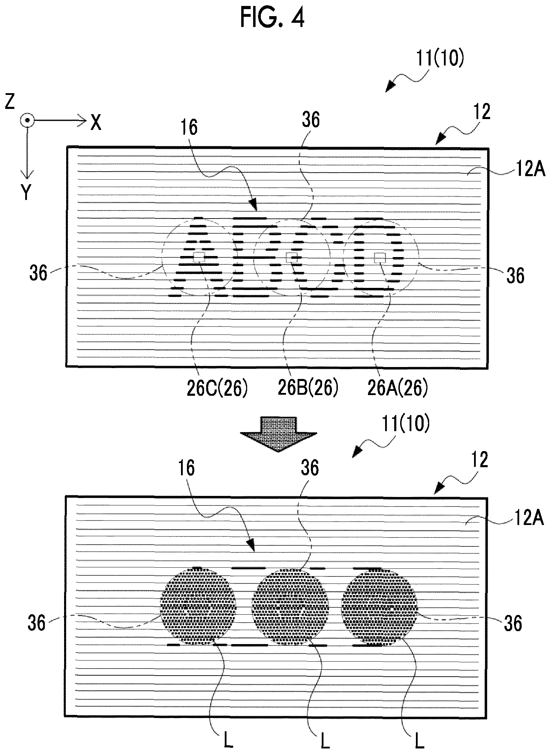

As illustrated in Fig. 4 as an example, a transmission portion 36, which is a region through which the emission light L is transmitted through the exterior body 12, is determined by a distance between the light-emitting unit 26 and the inner surface of the exterior body 12 and a spread angle of the emission light L. Specifically, the transmission portion 36 is determined by the distance between the LED light sources 26A to 26C of the light-emitting unit 26 and an inner surface 22A1 of the bottom plate portion 22A and the spread angle of the emission light L from the LED light sources 26A to 26C. In other words, the first member 22 of the exterior body 12 has the transmission portion 36 that allows the transmission of the emission light L from the light-emitting unit 26. The transmission portion 36 is an example of a "transmission portion" according to the present disclosed technology.

In the mobile printer 11, the light-emitting unit 26 may emit light (for example, light up on or blink). Accordingly, it is possible to notify of an operation state of the mobile printer 11 or to improve a user experience (for example, to improve the fun that a user feels during use). Here, in a case in which the exterior body 12 of the mobile printer 11 is viewed in a plan view (here, in a case of being viewed from the upper surface), the light emission via the light-emitting unit 26 overlaps a position of the display unit 16 (that is, the light-emitting unit 26 faces the display unit 16). In such a case, it is difficult to see the display unit 16 due to the light emission of the light-emitting unit 26. That is, in a case in which the light-emitting unit 26 emits light, the emission light L transmitted through the exterior body 12 is easily visually recognized, and reflected light (for example, reflected light caused by the difference in three-dimensional shape from the periphery) in the display unit 16 is not easily visually recognized. As a result, the visibility of the display unit 16 is decreased.

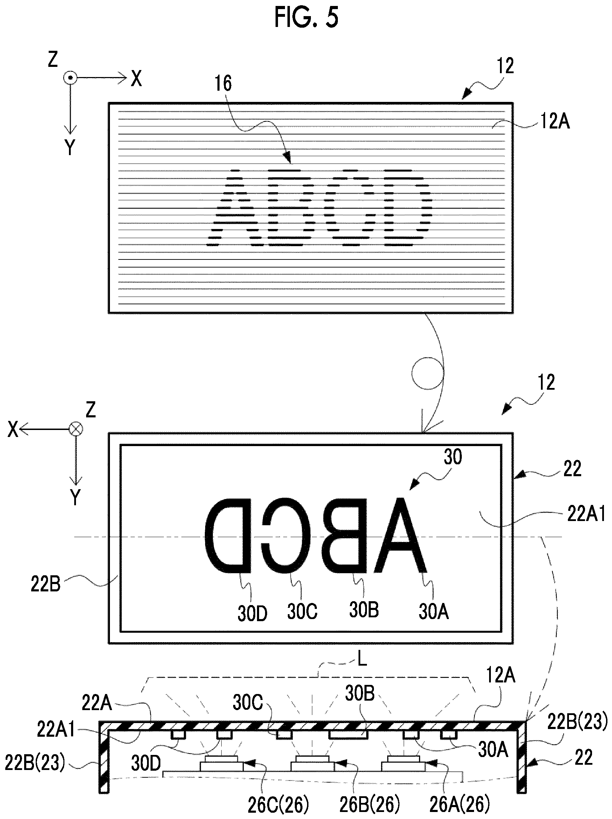

Therefore, as illustrated in Fig. 5 as an example, in the present embodiment, in the exterior body 12, a difference in transmittance of the emission light L emitted from the light-emitting unit 26 is generated between a region corresponding to the display unit 16 and a region on the periphery. Specifically, a transmission suppression layer 30 containing a material having lower light transmittance than the periphery is formed on the inner surface of the exterior body 12. More specifically, the transmission suppression layer 30 is formed on the inner surface 22A1 of the bottom plate portion 22A in the first member 22 of the exterior body 12. The transmission suppression layer 30 is formed in the region corresponding to the display unit 16. The region corresponding to the display unit 16 is, for example, a back surface of the display unit 16, and is a range having the same size as the display unit 16. In the example illustrated in Fig. 5, transmission suppression layers 30A, 30B, 30C, and 30D having shapes in which the characters "ABCD" shown by the display unit 16 are inverted are formed. The region corresponding to the display unit 16 need not be a range having the same size as the display unit 16, and the size may be changed as appropriate.

The transmission suppression layers 30A, 30B, 30C, and 30D are formed on the inner surface 22A1 of the first member 22 by printing. Specifically, the transmission suppression layers 30A, 30B, 30C, and 30D are formed by printing using a coating material containing a material that absorbs the wavelength in the visible light range. For example, the transmission suppression layers 30A, 30B, 30C, and 30D are printed using a black coating material. A part of the emission light L is absorbed or reflected due to the interaction with the transmission suppression layer 30. In this way, the transmission of the emission light L in the region corresponding to the display unit 16 is suppressed.

As described above, the light-emitting unit 26 is provided at a position facing the display unit 16. In addition, inside the exterior body 12, the transmission suppression layer 30 is formed in the region corresponding to the display unit 16. Therefore, the transmission of a part of the emission light L from the light-emitting unit 26 is suppressed by the transmission suppression layer 30. Here, a part of the emission light L is absorbed by the black coating material included in the transmission suppression layer 30. In addition, in the example illustrated in Fig. 5, in a case in which the first member 22 is viewed from the inner surface side (here, in a case of being viewed from below), the transmission suppression layers 30A, 30B, 30C, and 30D have the shapes in which the characters "ABCD" are inverted. Therefore, in the region having the shapes in which the characters of "ABCD" are inverted, the transmission of the emission light L through the exterior body 12 is suppressed.

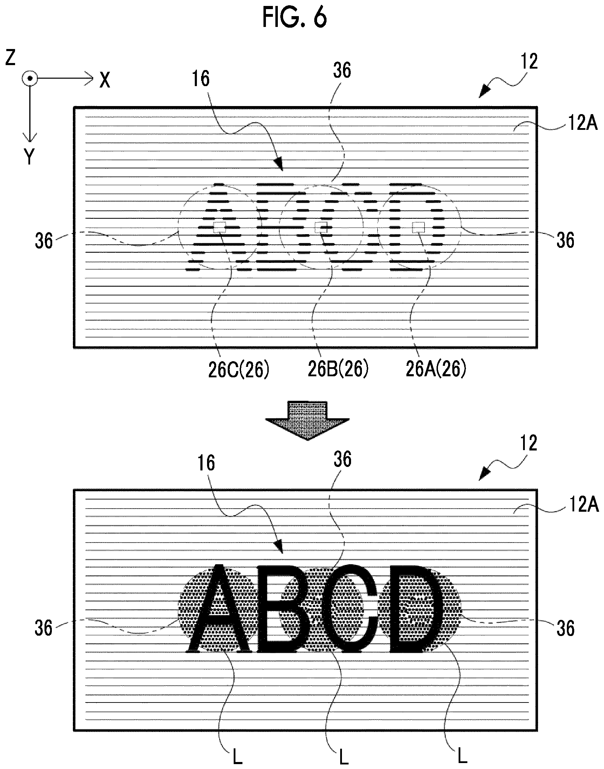

As illustrated in Fig. 6 as an example, in the mobile printer 11, in a case in which the light-emitting unit 26 emits light, as described above, the transmission of the emission light L is suppressed by the transmission suppression layer 30 provided in the region corresponding to the display unit 16. As a result, the emission light L is less likely to be transmitted through the display unit 16, and thus the display unit 16 is easily visually recognized. In the example illustrated in Fig. 6, the characters "ABCD" of the display unit 16 are easily visually recognized by the transmission suppression layer 30 having the shapes in which the characters "ABCD" are inverted.

As a result, even in a case in which the region corresponding to the display unit 16 is identified from other portions due to a difference in a degree of visual recognition and the light-emitting unit 26 provided inside the exterior body 12 is lighted up, it is easy to recognize the display unit 16. In addition, in a range illuminated with the emission light L, the content (here, the characters "ABCD") indicated by the transmission suppression layer 30 floats as a shadow, and the designability is improved.

A portion of the exterior body 12 facing the light-emitting unit 26 is required to contain a material having relatively high transmittance in order to transmit the emission light L from the light-emitting unit 26. On the other hand, a portion opposite to the portion facing the light-emitting unit 26 is required to contain a material having relatively low transmittance. This configuration is to suppress the entry of unnecessary external light into the inside of the exterior body 12.

In a case in which the exterior body 12 is formed by combining two types of members having different optical characteristics (for example, light transmittance), a difference in the optical characteristics makes it noticeable that the two types of members are separate components in a portion in which the two types of members are in contact with each other. As a result, the exterior body 12 may lack a sense of unity as a whole and may impair the exterior characteristics.

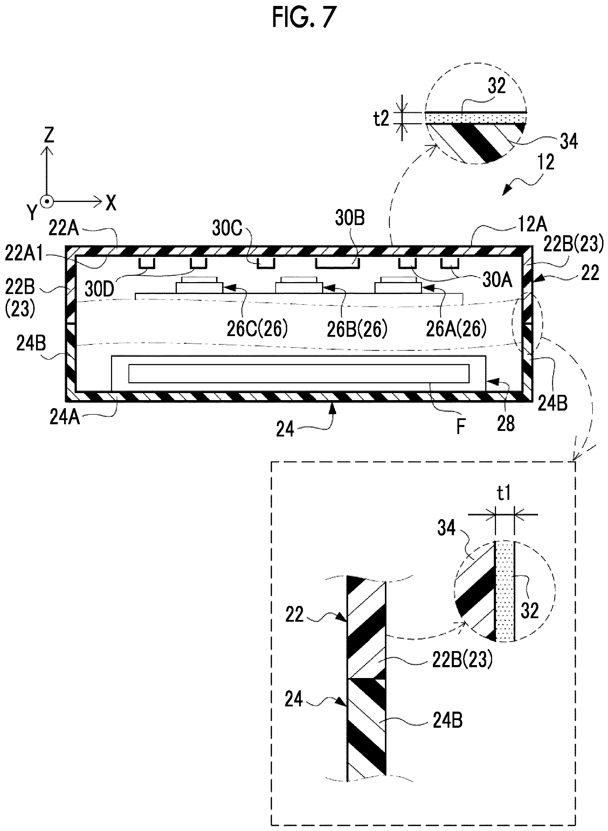

Therefore, as illustrated in Fig. 7 as an example, a thickness of a coating film 32 is adjusted in the first member 22 of the exterior body 12. The first member 22 includes the coating film 32 and a substrate 34. The coating film 32 is formed on a front surface of the substrate 34. The substrate 34 is formed of a translucent material. Here, the translucent material is a material that allows the transmission of the light while scattering the light. The substrate 34 is, for example, a milky white resin. In addition, the coating film 32 is a film formed by fixing the coating material to the front surface of the substrate 34, and the type of the coating material is set as appropriate in accordance with a color variation of the exterior body 12. As described above, the emission light L from the light-emitting unit 26 is emitted to the outside through the first member 22. Since the first member 22 is formed of the translucent material, the emission light L is easily emitted to the outside of the exterior body 12, and the emission light L is easily visually recognized. The coating film 32 is an example of a "coating film" according to the present disclosed technology.

The coating film 32 has a thickness t1 in the side wall portion 22B of the first member 22. On the other hand, the coating film 32 has a thickness t2 in the bottom plate portion 22A of the first member 22. In addition, the thickness t1 of the coating film 32 in the side wall portion 22B is greater than the thickness t2 of the coating film 32 in the bottom plate portion 22A. In other words, in the transmission portion 36 (see Fig. 4) through which the emission light L is transmitted in the bottom plate portion 22A, the thickness t2 of the coating film 32 is less than the thickness t1 of the coating film 32 in the side wall portion 22B.

Specifically, the thickness t1 of the coating film 32 in the side wall portion 22B is 1.5 times or more the thickness t2 of the coating film 32 in the bottom plate portion 22A. More specifically, the thickness t1 is, for example, about 20 µm, and the thickness t2 is, for example, about 10 to 12 µm.

The second member 24 includes a bottom plate portion 24A and a side wall portion 24B that is erected from a peripheral edge of the bottom plate portion 24A along the height direction. The second member 24 is formed of a non-transparent material. Here, the non-transparent material is a material that cuts light. Specifically, the non-transparent material is, for example, a material in which titanium oxide particles are dispersed in a resin as a base material. That is, the second member 24 is formed of, for example, a resin containing titanium oxide. As described above, the space 28 in which the film F is accommodated is formed in the second member 24. Since the second member 24 is formed of the non-transparent material, the entry of the external light into the inside of the second member 24 is suppressed.

The first member 22 and the second member 24 are joined in a state of being adjacent to each other. Further, the first member 22 is in contact with the second member 24 via the contact portion 23. In the example illustrated in Fig. 7, the side wall portion 22B of the first member 22 and the side wall portion 24B of the second member 24 are in contact with each other. That is, in the first member 22, the side wall portion 22B is the contact portion 23. Specifically, the lower surface of the side wall portion 22B of the first member 22 and the upper surface of the side wall portion 24B of the second member 24 are in contact with each other. Then, as described above, the thickness t1 of the coating film 32 in the side wall portion 22B is greater than the thickness t2 of the coating film 32 in the bottom plate portion 22A. That is, the thickness t1 of the coating film 32 in the contact portion 23 is greater than the thickness t2 of the coating film 32 in the transmission portion 36.

The first member 22 and the second member 24 are joined to each other in a state in which the side wall portion 22B and the side wall portion 24B are in contact with each other. The method of joining the first member 22 and the second member 24 is not particularly limited, and may be, for example, mechanical fastening in which a fixing unit for fitting a claw for fixing into a hole and screwing are combined, or may be joined by an adhesive, ultrasonic welding, or the like.

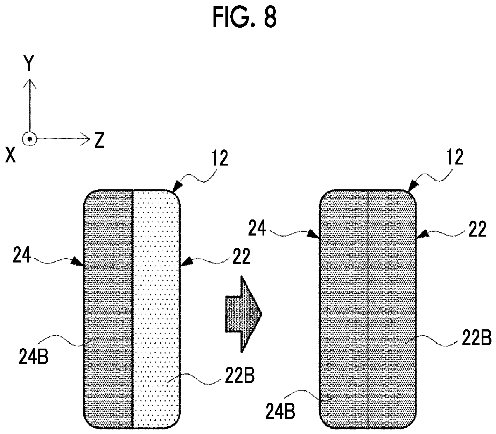

As an example, a case is considered in which the thickness t1 of the coating film 32 in the side wall portion 22B of the first member 22 (hereinafter, simply referred to as a coating film thickness t1) is less than the thickness t2 of the coating film 32 in the bottom plate portion 22A of the first member 22 (hereinafter, simply referred to as a coating film thickness t2), as illustrated on the left side of Fig. 8. In such a case, in a portion (here, the side wall portion 22B and the side wall portion 24B) in which the first member 22 and the second member 24 are in contact with each other, the difference in the light transmittance makes it noticeable that the first member 22 and the second member 24 are separate components.

On the other hand, as illustrated on the right side of Fig. 8, a case is considered in which the coating film thickness t1 in the side wall portion 22B of the first member 22 is greater than the coating film thickness t2 in the bottom plate portion 22A of the first member 22. In such a case, the light transmittance of the side wall portion 22B of the first member 22 is close to the light transmittance of the side wall portion 24B of the second member 24, so that a difference between the first member 22 and the second member 24 is less noticeable. As a result, a sense of unity of the entire exterior body 12 as a whole is increased, and the exterior characteristics are improved.

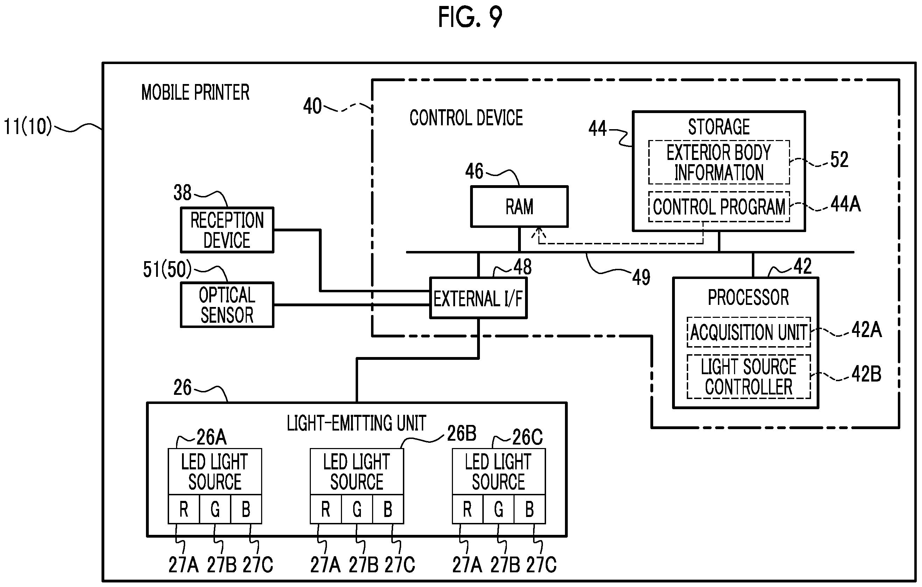

Next, a hardware configuration of an electrical system of the mobile printer 11 according to the present embodiment will be described. As illustrated in Fig. 9 as an example, the mobile printer 11 comprises a control device 40. The control device 40 controls an overall operation of the mobile printer 11. The control device 40 comprises a processor 42, a storage 44, a random-access memory (RAM) 46, and an external interface (I/F) 48. The processor 42, the RAM 46, the storage 44, and the external I/F 48 are connected to a bus 49. The processor 42 is an example of a "processor" according to the present disclosed technology. The control device 40 is an example of a "computer" according to the present disclosed technology.

A memory is connected to the processor 42. The memory includes the storage 44 and the RAM 46. The processor 42 has, for example, a central processing unit (CPU). It should be noted that the processor 42 may be provided with a graphics processing unit (GPU) dedicated to image processing, separately from the CPU.

The RAM 46 is a memory that stored stores the information and is used as a work memory by the processor 42. Examples of the RAM 46 include a dynamic random access memory (DRAM) or a static random access memory (SRAM).

The storage 44 is a non-volatile storage device that stores various programs, various parameters, and the like. Examples of the storage 44 include a flash memory (for example, an electrically erasable and programmable read only memory (EEPROM) and a solid state drive (SSD)), and/or a hard disk drive (HDD). It should be noted that the flash memory and the HDD are merely examples, and at least one of the flash memory, the HDD, a magnetoresistive memory, or a ferroelectric memory may be used as the storage 44.

The external I/F 48 is responsible for exchanging various types of information with devices present outside the control device 40. The external I/F 48 is communicably connected to the light-emitting unit 26, a reception device 38, and a detection unit 50.

The light-emitting unit 26 can emit the light L having various light emission colors and light emission intensities in accordance with the setting of the parameters. Specifically, as described above, the mobile printer 11 comprises the LED light source 26A, the LED light source 26B, and the LED light source 26C as the light-emitting units 26. The LED light source 26A includes a red (R) light-emitting element 27A, a green (G) light-emitting element 27B, and a blue (B) light-emitting element 27C. By changing the setting of the parameters related to the light emission of each light-emitting element of the LED light source 26A, the light amount and the light emission color of the LED light source 26A are adjusted.

Similarly, the LED light sources 26B and 26C also includes the red (R) light-emitting element 27A, the green (G) light-emitting element 27B, and the blue (B) light-emitting element 27C. It should be noted that, in the following description, in a case in which it is not necessary to distinguish between the red (R) light-emitting element 27A, the green (G) light-emitting element 27B, and the blue (B) light-emitting element 27C, the red (R) light-emitting element 27A, the green (G) light-emitting element 27B, and the blue (B) light-emitting element 27C may be simply referred to as a "light-emitting element 27".

In addition, in the LED light sources 26B and 26C, the light amount and the light emission color of the LED light sources 26B and 26C are also adjusted by changing the setting of the parameters of the light-emitting element 27. As a result of adjusting the light amounts and the light emission colors of the LED light source 26A to the LED light source 26C, the emission light L is emitted from the light-emitting unit 26.

The light-emitting element 27 is an LED that emits a pulse of light in accordance with a periodically input driving pulse. Examples of the parameters of the light-emitting element 27 include a duty ratio of the driving pulse, and/or an emission time determined by the number of repetitions of the driving pulse.

The detection unit 50 can detect information on the exterior body 12 of the mobile printer 11. In the example illustrated in Fig. 9, an optical sensor 51 is illustrated as the detection unit 50. The optical sensor 51 is, for example, a sensor that can detect the color and the illuminance of the light incident on the light-receiving element.

As described above, the light-emitting unit 26 is caused to emit light, and it is possible to notify of the operation state of the mobile printer 11 or to improve the user experience. In such a case, the light L emitted from the light-emitting unit 26 is affected by the state of the exterior body 12. For example, in a case in which the exterior body 12 presents a red color, it is assumed that white light is emitted from the light-emitting unit 26. In such a case, even though the white light is intended to be visually recognized, the emission light L is transmitted through the red exterior body 12, so that the emission light L having a reddish color is visually recognized by the user. As described above, a visual recognition state of the emission light L by the user is changed from the intended state. Here, the visual recognition state of the user includes the color of the emission light L recognized by the user and a degree (for example, brightness) of intensity of the emission light L recognized by the user.

Therefore, in view of such circumstances, in the mobile printer 11 according to the present embodiment, in the control device 40, the processor 42 reads out a control program 44A from the storage 44 and executes the readout control program 44A on the RAM 46. As a result, the processor 42 operates as an acquisition unit 42A and a light source controller 42B. The control program 44A is an example of a "program" according to the present disclosed technology.

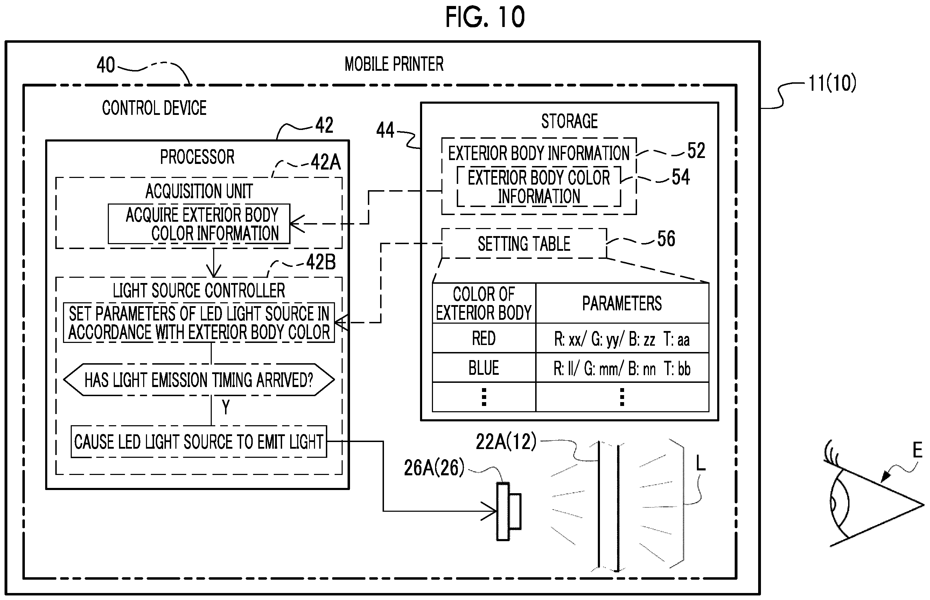

As illustrated in Fig. 10 as an example, in the processor 42, the acquisition unit 42A acquires exterior body information 52 from the storage 44. The exterior body information 52 is information on the exterior body 12. The exterior body information 52 includes information on the exterior body 12 itself, and includes information on the periphery of the exterior body 12. The exterior body information 52 includes exterior body color information 54. The exterior body color information 54 is information on the color of the exterior body 12. The exterior body color information 54 is stored in the storage 44 in, for example, a manufacturing stage of the mobile printer 11. In addition, for example, the exterior body color information 54 may be obtained by detecting the color of the exterior body 12 via the detection unit 50. Further, in a case in which the exterior body 12 is replaced, the exterior body color information 54 may be updated by reading a contactless storage medium (not illustrated) provided in the exterior body 12 with a contactless reading device (not illustrated). The acquisition unit 42A outputs the exterior body color information 54 to the light source controller 42B. The exterior body information 52 is an example of "exterior body information" according to the present disclosed technology, and the exterior body color information 54 is an example of "exterior body color information" according to the present disclosed technology.

The light source controller 42B executes control of adjusting the light emission aspect of the light-emitting unit 26 based on the exterior body information 52. Specifically, the light source controller 42B acquires the exterior body color information 54 from the acquisition unit 42A. In addition, the light source controller 42B executes control of adjusting the light emission aspect of the light-emitting unit 26 in accordance with the color of the exterior body 12 indicated by the exterior body color information 54. Here, the control of the light emission aspect includes control of the light emission color of the light-emitting unit 26 and control of the light emission amount of the light-emitting unit 26. In addition, the control of the light emission aspect also includes control of whether or not the light emission of the light-emitting unit 26 (for example, light up or blink) is performed, or control of which of the plurality of LED light sources 26A to 26C emits light or in what order the light is emitted.

Specifically, the light source controller 42B executes control of setting the parameters. More specifically, the light source controller 42B acquires a setting table 56 from the storage 44. The setting table 56 is a table in which the color of the exterior body 12 is set as input information and the parameters of the light emission conditions of the light-emitting unit 26 are set as output information. The setting table 56 is obtained, for example, by adjusting the light emission color in accordance with the color of the exterior body 12 in a sensory test using an actual machine and setting the light L transmitted through the exterior body to a reference color.

In the example illustrated in Fig. 10, in a case in which red or blue is the input information as the color of the exterior body 12 in the setting table 56, the parameters of the respective LED light sources 26A to 26C are illustrated as the corresponding output information. As the parameters, the duty ratio (ratio between a pulse width and a pulse interval) of the driving pulse of each of the light-emitting elements 27 of red (R), green (G), and blue (B) constituting each of the LED light sources 26A to 26C is illustrated, and a total light emission time T of each of the LED light sources 26A to 26C is illustrated. It should be noted that, although not illustrated, the parameters are also held in the setting table 56 for the color of the exterior body 12 other than red and blue.

The light source controller 42B reads out the parameters of the LED light sources 26A to 26C based on the exterior body color information 54 by using the setting table 56. Specifically, the parameters of the LED light sources 26A to 26C corresponding to the color of the exterior body 12 indicated by the exterior body color information 54 are read out. Then, the light source controller 42B executes the setting of the readout parameters of the LED light sources 26A to 26C. Specifically, the duty ratios of the driving pulses of the light-emitting elements 27 of red (R), green (G), and blue (B) constituting the respective LED light sources 26A to 26C are set, and the total light emission time T of the respective LED light sources 26A to 26C is set. As described above, the light source controller 42B executes the control of adjusting the light emission aspects of the LED light sources 26A to 26C.

Adjusting the duty ratio of the driving pulse of the light-emitting element 27 of each color means adjusting the light emission amount per unit time of the light-emitting element 27 of each color. Then, by a combination of the light emission amount of the light-emitting elements 27 of each color, it is possible to produce light of various colors as the LED light sources 26A to 26C which are a set of the light-emitting elements 27 of each color.

For example, in a case in which the light emission amount of the light-emitting element 27 of red (R) is relatively large, the light of the LED light sources 26A to 26C is increased in redness, and in a case in which the light emission amount of the light-emitting element 27 of blue (B) is relatively large, the light of the LED light sources 26A to 26C is increased in blueness. By making the light emission amount of each light-emitting element 27 uniform, the light from the LED light sources 26A to 26C is the white light. In addition, by finely adjusting the light emission amount of the light-emitting element 27 of each color, it is possible to produce the light of a wider variety of colors. Further, in a case in which each of the LED light sources 26A to 26C is caused to emit light of different colors, it is also possible to change the color for each region of each of the LED light sources 26A to 26C. As described above, adjusting the light amount ratio of the light emitted from the light-emitting elements 27 of red (R), green (G), and blue (B) in the light emission colors of the LED light sources 26A to 26C and changing the light emission colors in the light emission colors of the LED light sources 26A to 26C make it possible to emit the emission light L corresponding to the color of the exterior body 12.

For example, in a case in which the color of the exterior body 12 is red, and the white light is desired to be emitted (that is, in a case in which the intended light emission color is white), the light emission amount of the light-emitting element 27 of red (R) is relatively reduced to make the color of the emission light L transmitted through the exterior body 12 close to white. In addition, for example, in a case in which the color of the exterior body 12 is blue, and the white light is desired to be emitted (that is, in a case in which the intended light emission color is white), the light emission amount of the light-emitting element 27 of blue (B) is relatively reduced to make the color of the emission light L transmitted through the exterior body 12 close to white.

Here, although the form example is described in which the parameters are set by using the setting table 56, this is merely an example. Instead of the setting table 56, a parameter derivation expression (not illustrated) representing the setting table 56 as a function may be used to set the parameters. The parameter derivation expression is an arithmetic expression in which a value indicating the exterior body color is an independent variable and a parameter value is a dependent variable.

The light source controller 42B determines whether or not a light emission timing of the light-emitting unit 26 has arrived. Examples of the light emission timing of the light-emitting unit 26 include a case in which the light-emitting unit 26 emits light while the mobile printer 11 is being activated, while the mobile printer 11 is communicating with the external device, or while the mobile printer 11 is performing a printing operation on the film F. In a case in which the light emission timing of the light-emitting unit 26 has arrived, the light source controller 42B causes the LED light sources 26A to 26C to emit light. As described above, the light emission aspects of the LED light sources 26A to 26C are adjusted in accordance with the color of the exterior body 12. The light L emitted from the light-emitting unit 26 is transmitted through the exterior body 12. In a case in which the light L transmitted through the exterior body 12 is recognized through eyes E of the user, the light L is recognized in a state close to the light emission color intended in advance.

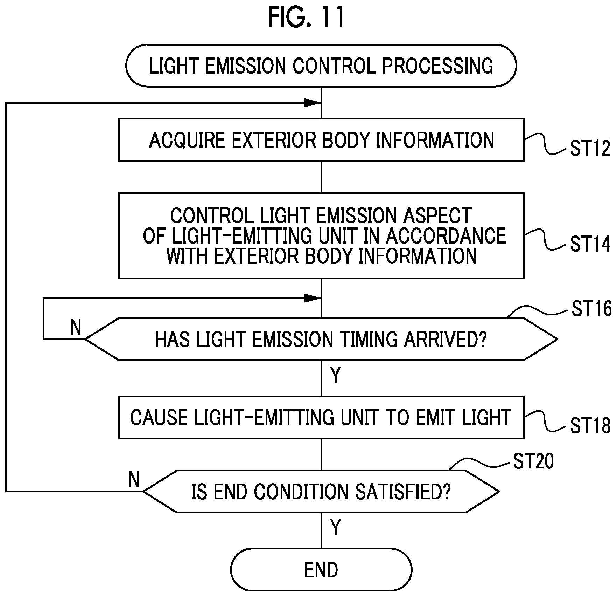

Next, light emission control processing in the mobile printer 11 according to the present embodiment will be described with reference to Fig. 11. Fig. 11 is a flowchart illustrating an example of the light emission control processing. A flow of the light emission control processing illustrated in Fig. 11 is an example of a "control method" according to the present disclosed technology.

In the light emission control processing illustrated in Fig. 11 as an example, first, in step ST12, the acquisition unit 42A acquires the exterior body information 52 from the storage 44. The exterior body information 52 includes the exterior body color information 54. After the processing in step ST12 is executed, the light emission control processing proceeds to step ST14.

In step ST14, the light source controller 42B controls the light emission aspect of the light-emitting unit 26 in accordance with the exterior body information 52 acquired in step ST12. Specifically, the light source controller 42B acquires the setting table 56 from the storage 44 to set the parameters of each of the LED light sources 26A to 26C by using the acquired setting table 56. After the processing in step ST14 is executed, the light emission control processing proceeds to step ST16.

In step ST16, the light source controller 42B determines whether or not the light emission timing of the light-emitting unit 26 has arrived. In step ST16, in a case in which the light emission timing has arrived, a Yes determination is made, and the light emission control processing proceeds to step ST18. In step ST16, in a case in which the light emission timing has not arrived, a No determination is made, and the light emission control processing proceeds to step ST16 again.

In step ST18, the light source controller 42B causes the light-emitting unit 26 to emit light. After the processing in step ST18 is executed, the light emission control processing proceeds to step ST20.

In step ST20, the light source controller 42B determines whether or not a condition (hereinafter, referred to as an "end condition") for the end of the light emission control processing is satisfied. Examples of the end condition include a condition in which an instruction to end the light emission control processing is received by the reception device 38. In step ST20, in a case in which the end condition is not satisfied, a No determination is made, and the light emission control processing proceeds to step ST12. In step ST20, in a case in which the end condition is satisfied, a Yes determination is made, and the light emission control processing ends.

As described so far, the electronic apparatus 10 according to the first embodiment includes the exterior body 12 and the light-emitting unit 26. The light-emitting unit 26 is provided inside the exterior body 12. In addition, the light-emitting unit 26 can emit the light L to the outside through the exterior body 12. Further, the electronic apparatus 10 comprises the processor 42, and, in the processor 42, the acquisition unit 42A acquires the exterior body information 52. The light source controller 42B executes control of adjusting the light emission aspect of the light-emitting unit 26 based on the acquired exterior body information 52. Accordingly, since the light emission aspect of the light-emitting unit 26 is adjusted in accordance with the state of the exterior body 12, the visual recognition state of the light L transmitted through the exterior body 12 is easily made to be close to the state intended in advance, as compared to a case in which the visual recognition state of the light L transmitted through the exterior body 12 is always the same light emission aspect even in a case in which the state of the exterior body 12 is changed.

In addition, in the electronic apparatus 10 according to the first embodiment, the exterior body information 52 includes the exterior body color information 54 that is information on the color of the exterior body 12. The control executed by the light source controller 42B includes control of adjusting the light emission color of the light-emitting unit 26 based on the exterior body color information 54. Accordingly, since the light emission color of the light-emitting unit 26 is adjusted in accordance with the color of the exterior body 12, the visually recognized color of the light L transmitted through the exterior body 12 is easily made to be close to a state intended in advance as compared to a case in which the light emission color is always the same even in a case in which the color of the exterior body 12 is changed.

In addition, in the electronic apparatus 10 according to the first embodiment, the stripe pattern consisting of the periodic recessed and protruding portions is formed on the front surface of the exterior body 12, and the difference in the three-dimensional shape in the display unit 16 is the difference in the height of the protruding portion of the stripe pattern. In a case in which the stripe pattern is formed on the front surface of the exterior body 12 in order to enhance the designability, the display unit 16 is formed by the difference in the height of the three-dimensional shape. In such a case, the emission light L is likely to be transmitted from the valleys of the recessed and protruding portions of the stripe pattern, but, in the present configuration, since the light emission aspect of the light-emitting unit 26 can be adjusted, the light L transmitted through the exterior body 12 is likely to be recognized.

In the electronic apparatus 10 according to the first embodiment, the display unit 16 is formed on the exterior body 12. The display unit 16 shows at least one of the character, the symbol, or the figure by the difference in the three-dimensional shape from the periphery on the front surface of the exterior body 12. Further, the display unit 16 is provided at a position facing the light-emitting unit 26. In a case in which the display unit 16 indicating the character or the like is formed by the difference in the three-dimensional shape, the difference in the transmittance of the light L is likely to be generated in the exterior body 12. In the present configuration, since the light emission aspect of the light-emitting unit 26 can be adjusted, it is easy to recognize the light L transmitted through the exterior body 12.

In addition, in the electronic apparatus 10 according to the first embodiment, in the exterior body 12, the coating film 32 is formed on the outside, and the thickness t1 of the coating film 32 in the transmission portion 36 through which the light from the light-emitting unit 26 is transmitted is set to be less than the thickness t2 of the coating film 32 in another region. Even in a case in which the thickness t2 of the coating film 32 is small in order to easily transmit the light L emitted from the light-emitting unit 26, in the present configuration, the light L transmitted through the exterior body 12 is easily recognized.

In addition, in the electronic apparatus 10 according to the first embodiment, the light-emitting unit 26 includes the LED light sources 26A to 26C, and the control via the light source controller 42B includes control of adjusting the light emission aspects of the LED light sources 26A to 26C. As a result, since the light emission aspect is adjusted by adjusting the duty ratio of the driving pulse of the LED and the light emission time determined by the number of repetitions of the driving pulse, it is easy to adjust the light emission aspects of the LED light sources 26A to 26C.

### First Modification Example

In the first embodiment, although the form example is described in which the light emission aspect of the light-emitting unit 26 is adjusted in accordance with the exterior body color information 54, the present disclosed technology is not limited to this. In the first modification example, the light emission aspect of the light-emitting unit 26 is adjusted in accordance with transmitted light color information 58 and transmitted light intensity information 60.

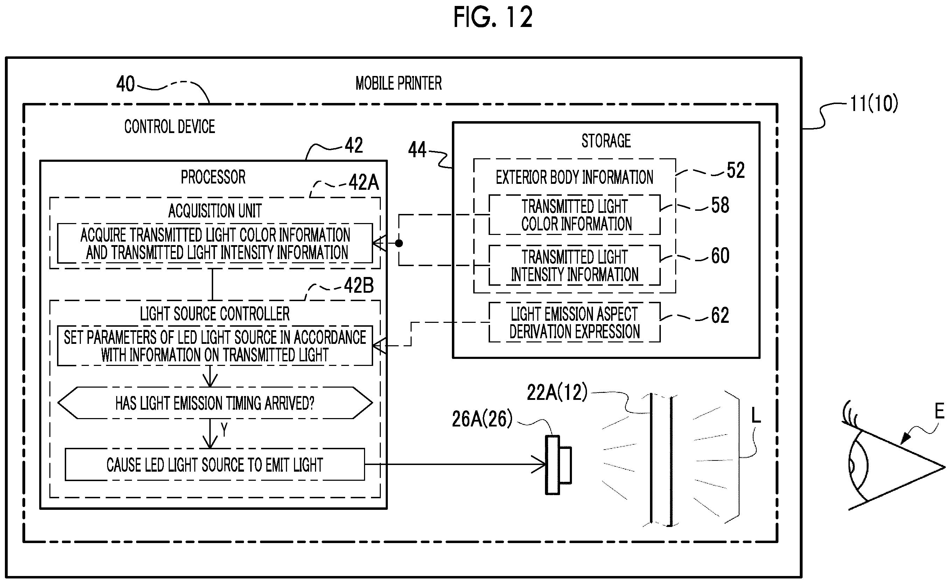

As illustrated in Fig. 12 as an example, in the processor 42, the acquisition unit 42A acquires the exterior body information 52 from the storage 44. In the first modification example, the exterior body information 52 includes the transmitted light color information 58 and the transmitted light intensity information 60. The transmitted light color information 58 is information on a change in the color of the light L transmitted through the exterior body 12. Specifically, the transmitted light color information 58 is information for specifying a degree of change in the color (hereinafter, also simply referred to as a "color change rate") of the light L transmitted through the exterior body 12 with respect to the color of the light L emitted from the light-emitting unit 26.

In addition, the transmitted light intensity information 60 is information on a change in the intensity of the light L transmitted through the exterior body 12. Specifically, the transmitted light intensity information 60 is information for specifying a degree of change in the intensity (for example, brightness) (hereinafter, also simply referred to as an "intensity change rate") of the light L transmitted through the exterior body 12 with respect to the light L emitted from the light-emitting unit 26. The color change rate and the intensity change rate are affected by, for example, the material of the exterior body 12, the type of the coating material, the thickness of the coating film 32, the front surface shape of the exterior body 12, and the like. The transmitted light color information 58 is an example of "transmitted light color information" according to the present disclosed technology, and the transmitted light intensity information 60 is an example of "transmitted light intensity information" according to the present disclosed technology.

The transmitted light color information 58 and the transmitted light intensity information 60 are stored in the storage 44, for example, in the manufacturing stage of the mobile printer 11. In addition, the transmitted light color information 58 and the transmitted light intensity information 60 are obtained, for example, by measuring the color and the brightness of the transmitted light via a color and brightness meter in a test using an actual machine and obtaining a rate of change with respect to the intended light emission color and brightness. Then, the acquisition unit 42A outputs the transmitted light color information 58 and the transmitted light intensity information 60 to the light source controller 42B.

The light source controller 42B acquires the transmitted light color information 58 and the transmitted light intensity information 60 from the acquisition unit 42A. In addition, the light source controller 42B executes control of adjusting the light emission aspect of the light-emitting unit 26 in accordance with the color change rate indicated by the transmitted light color information 58 and the intensity change rate indicated by the transmitted light intensity information 60.

Specifically, the light source controller 42B executes the control of setting the parameters. More specifically, the light source controller 42B acquires the light emission aspect derivation expression 62 from the storage 44. The light emission aspect derivation expression 62 is an arithmetic expression in which the color change rate and the intensity change rate are independent variables and the parameter value (for example, the duty ratio of the driving pulse or the total light emission time T) is a dependent variable. The light emission aspect derivation expression 62 is obtained, for example, by adjusting the light emission color and the light emission amount in accordance with the measurement result of the transmitted light in a sensory test using an actual machine and matching the light emission color and the brightness with the intended light emission color and brightness.

For example, in a case in which the red component tends to decrease in the color change rate of the exterior body 12, and the white light is desired to be emitted (that is, in a case in which the intended light emission color is white), the light emission amount of the light-emitting element 27 of red (R) is relatively increased to make the color of the emission light L transmitted through the exterior body 12 close to white. In addition, for example, in a case in which the intensity of the light L tends to decrease by about 10% in the intensity change rate of the exterior body 12, the light emission amount of each light-emitting element 27 is increased by about 10% to bring the brightness of the emission light L transmitted through the exterior body 12 close to an intended value.

It should be noted that, here, although the form example is described in which the parameters are set by using the light emission aspect derivation expression 62, this is merely an example, and a derivation table may be used. The derivation table is a table in which the color change rate and the intensity change rate are input information and the value of the parameter is output information.

In a case in which the light emission timing of the light-emitting unit 26 has arrived, the light source controller 42B causes the LED light sources 26A to 26C to emit light. As described above, the light emission aspects of the respective LED light sources 26A to 26C are adjusted in accordance with the color change rate and the intensity change rate. In a case in which the light L transmitted through the exterior body 12 is recognized through the eyes E of the user, the light L is recognized in a state close to the light emission aspect that is intended in advance.

As described so far, in the electronic apparatus 10 according to the first modification example, the exterior body information 52 includes the transmitted light color information 58. The control via the light source controller 42B includes control of adjusting the light emission color of the light-emitting unit 26 based on the transmitted light color information 58. Accordingly, since the light emission color is adjusted in accordance with the color change rate of the light L transmitted through the exterior body 12, the color of the light L transmitted through the exterior body 12 can be made to be close to an intended color as compared to a case in which the light emission color is always the same. For example, in a case in which the exterior body 12 has a color variation, and the appearance of the color of the light L is changed in accordance with the color of the exterior body 12, it is necessary to change the description of the color of the light L for each color variation. In the present configuration, since the color of the light L transmitted through the exterior body 12 is made to be close to the intended color, the complexity of the description is reduced. In addition, the variation in the appearance of the light emission color of the product is reduced, which can also contribute to the improvement of the quality.

In the electronic apparatus 10 according to the first modification example, the exterior body information 52 includes the transmitted light intensity information 60. The control via the light source controller 42B includes control of adjusting the light emission amount of the light-emitting unit 26 based on the transmitted light intensity information 60. Accordingly, since the light emission amount is adjusted in accordance with the intensity change rate of the light L transmitted through the exterior body 12, the intensity (for example, the brightness) of the light L transmitted through the exterior body 12 can be made to be close to the intended intensity of the light as compared to a case in which the light emission amount is always the same.

It should be noted that, in the first modification example, the form example is described in which the light emission aspect of the light-emitting unit 26 is adjusted based on both the transmitted light color information 58 and the transmitted light intensity information 60, but the present disclosed technology is not limited to this. For example, an aspect may be adopted in which only the adjustment of the light emission color of the light-emitting unit 26 is performed based on the transmitted light color information 58, or an aspect may be adopted in which only the adjustment of the light emission amount of the light-emitting unit 26 is performed based on the transmitted light intensity information 60.

### Second Embodiment

In the first embodiment, although the form example is described in which the light emission aspect is adjusted in accordance with the exterior body information 52, the present disclosed technology is not limited to this. In the second embodiment, the light emission aspect of the light-emitting unit 26 is adjusted based on the ambient light information 64.

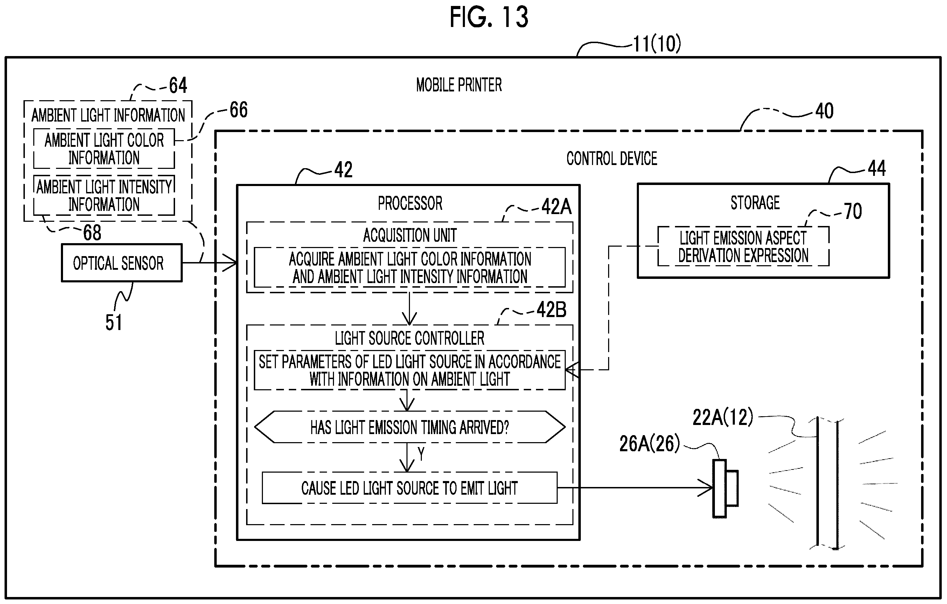

As illustrated in Fig. 13 as an example, the mobile printer 11 comprises the optical sensor 51. The optical sensor 51 detects the ambient light (that is, the external light) on the periphery of the exterior body 12 via the light-receiving element. Then, the optical sensor 51 outputs the ambient light information 64 to the processor 42 based on a detection result. The ambient light information 64 is information on the ambient light on the periphery of the exterior body 12. The ambient light information 64 is an example of "ambient light information" according to the present disclosed technology. The ambient light information 64 includes ambient light color information 66 and ambient light intensity information 68. The ambient light color information 66 is information indicating the color of the ambient light. The ambient light intensity information 68 is information indicating the brightness (that is, the illuminance of the ambient light) of the periphery of the exterior body 12.

In the processor 42, the acquisition unit 42A acquires the ambient light color information 66 and the ambient light intensity information 68, as the ambient light information 64, from the optical sensor 51. Then, the acquisition unit 42A outputs the ambient light color information 66 and the ambient light intensity information 68 to the light source controller 42B.

The light source controller 42B acquires the ambient light color information 66 and the ambient light intensity information 68 from the acquisition unit 42A. The light source controller 42B executes control of adjusting the light emission aspect of the light-emitting unit 26 based on the ambient light information 64. Specifically, the light source controller 42B executes control of adjusting the light emission aspect of the light-emitting unit 26 in accordance with the color of the ambient light indicated by the ambient light color information 66 and the brightness of the periphery indicated by the ambient light intensity information 68.

Specifically, the light source controller 42B executes the control of setting the parameters. More specifically, the light source controller 42B acquires the light emission aspect derivation expression 70 from the storage 44. The light emission aspect derivation expression 70 is an arithmetic expression in which the color and the illuminance of the ambient light are independent variables and a parameter vale (for example, the duty ratio of the driving pulse or the total light emission time T) is a dependent variable. The light emission aspect derivation expression 70 is obtained, for example, by adjusting the light emission color and the light emission amount in accordance with the measurement result of the ambient light in a sensory test using an actual machine.

For example, in a case in which the red component exceeds a threshold value in the color of the ambient light (for example, indoors with red illumination or outdoors under a sunset), and the white light is desired to be emitted (that is, in a case in which an intended light emission color is white), the light emission amount of the light-emitting element 27 of red (R) is relatively increased. As a result, it is possible to make the color of the emission light L transmitted through the exterior body 12 close to white even in the reddish ambient light. In addition, for example, in a case in which the brightness of the ambient light exceeds a threshold value, the light emission amount from each light-emitting element 27 is increased to bring the light amount of the emission light L transmitted through the exterior body 12 close to an intended value. As a result, the light emission of the light-emitting unit 26 is easily visually recognized even in a dazzling environment, such as under sunlight.

It should be noted that, here, although the form example is described in which the parameters are set by using the light emission aspect derivation expression 70, this is merely an example, and a derivation table may be used. The derivation table is a table in which the color and the brightness of the ambient light are input information and the parameter value is output information.

In a case in which the light emission timing of the light-emitting unit 26 has arrived, the light source controller 42B causes the LED light sources 26A to 26C to emit light. As described above, the light emission aspects of the LED light sources 26A to 26C are adjusted in accordance with the color and the brightness of the ambient light. In a case in which the light L transmitted through the exterior body 12 is recognized through the eyes E of the user, the light L is recognized in a state close to the light emission aspect that is intended in advance.

As described so far, in the electronic apparatus 10 according to the second embodiment, in the processor 42, the acquisition unit 42A acquires the ambient light information 64 that is information on the ambient light on the periphery of the exterior body. The control via the light source controller 42B includes control of adjusting the light emission aspect of the light-emitting unit 26 based on the acquired ambient light information 64. Accordingly, since the light emission aspect is adjusted in accordance with the ambient light on the periphery of the exterior body 12, the light L transmitted through the exterior body 12 can be made to be close to the intended recognition state as compared to a case in which the same light emission aspect is always maintained even in a case in which the ambient light changes.

In addition, in the electronic apparatus 10 according to the second embodiment, the ambient light information 64 includes the ambient light intensity information 68. The control via the light source controller 42B includes control of adjusting the light emission amount of the light-emitting unit 26 based on the ambient light intensity information 68. Accordingly, since the light emission amount is adjusted in accordance with the brightness of the periphery of the exterior body 12, the brightness of the light L transmitted through the exterior body 12 can be made to be close to the intended brightness as compared to a case in which the light emission amount is always the same even in a case in which the brightness of the ambient light is changed.

In addition, in the electronic apparatus 10 according to the second embodiment, the ambient light information 64 includes the ambient light color information 66. The control via the light source controller 42B includes control of adjusting the light emission color of the light-emitting unit 26 based on the ambient light color information 66. Accordingly, since the light emission color is adjusted in accordance with the color of the ambient light on the periphery of the exterior body 12, the light L transmitted through the exterior body 12 can be made to be close to the intended emission color as compared to a case in which the light emission color is always the same even in a case in which the color of the ambient light is changed.

It should be noted that, in the second embodiment, although the form example is described in which the light emission aspect of the light-emitting unit 26 is adjusted based on both the ambient light color information 66 and the ambient light intensity information 68, the present disclosed technology is not limited to this. For example, an aspect may be adopted in which only the adjustment of the light emission color of the light-emitting unit 26 is performed based on the ambient light color information 66, or an aspect may be adopted in which only the adjustment of the light emission amount of the light-emitting unit 26 is performed based on the ambient light intensity information 68.

### Third Embodiment

In the first embodiment, the form example is described in which the exterior body color information 54 is used as the exterior body information 52 and the adjustment of the light emission aspect is performed based on the exterior body color information 54, but the present disclosed technology is not limited to this. In the third embodiment, the exterior body information 52 includes information on a movable portion 72 of the exterior body 12.

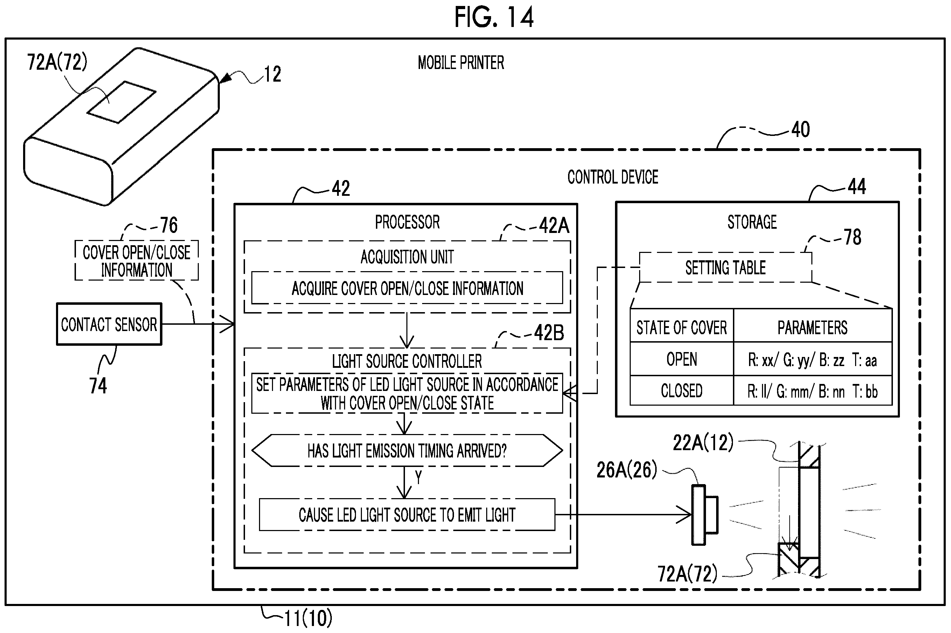

As illustrated in Fig. 14 as an example, the exterior body 12 comprises the movable portion 72. The movable portion 72 is a part of the exterior body 12 and is a portion that is movable with respect to a main body of the exterior body 12. In the example illustrated in Fig. 14, the movable portion 72 is a cover member 72A provided at a position facing the light-emitting unit 26. The cover member 72A is openable and closable, and the light-emitting unit 26 is exposed to the outside of the exterior body 12 in a case in which the cover member 72A is in an open state. The cover member 72A is, for example, a slide cover.

Further, the mobile printer 11 comprises a contact sensor 74. The contact sensor 74 detects a position of the movable portion 72. In the example illustrated in Fig. 14, the contact sensor 74 detects whether or not the cover member 72A is located at an open position. The contact sensor 74 is, for example, a mechanical switch that is turned on in a case in which the cover member 72A is located at an open position and that is turned in a case in which the cover member 72A is located at a closed position. Then, the contact sensor 74 outputs information on the movable portion 72 based on the detection result as the exterior body information 52. That is, in the present embodiment, the exterior body information 52 includes information on the movable portion 72. In the example illustrated in Fig. 14, the contact sensor 74 outputs cover open/close information 76 to the processor 42. The cover open/close information 76 is information indicating an open/close state of the cover member 72A. The cover open/close information 76 is an example of "information on a state of a movable portion of the exterior body" according to the present disclosed technology. The cover member 72A is an example of a "cover member" according to the present disclosed technology.

In the processor 42, the acquisition unit 42A acquires the cover open/close information 76 as the information on the movable portion 72 from the contact sensor 74. Then, the acquisition unit 42A outputs the cover open/close information 76 to the light source controller 42B.

The light source controller 42B acquires the cover open/close information 76 from the acquisition unit 42A. In addition, the light source controller 42B executes control of adjusting the light emission aspect of the light-emitting unit 26 in accordance with the open/close state of the cover member 72A indicated by the cover open/close information 76. Specifically, the light source controller 42B executes control of setting the parameters by using the setting table 78. The aspect of the parameter control is the same as the aspect in the first embodiment described above, and thus the details thereof will be omitted. In addition, here, although the form example is described in which the parameters are set by using the setting table 78, this is merely an example, and the light emission aspect derivation expression may be used.

For example, in a case in which the cover member 72A is open, the light emission amount from the light-emitting element 27 is relatively reduced. As a result, even in a case in which the emission light L is directly visually recognized by the user, the light amount of the emission light L can be made close to an intended value.

In a case in which the light emission timing of the light-emitting unit 26 has arrived, the light source controller 42B causes the LED light sources 26A to 26C to emit light. As described above, the light amount of each of the LED light sources 26A to 26C is adjusted in accordance with the open/close state of the cover member 72A. Therefore, in a case in which the light L is recognized through the eyes E of the user, the light L is recognized in a state close to the light amount intended in advance.

As described so far, in the electronic apparatus 10 according to the third embodiment, the exterior body information 52 includes information on the state of the movable portion 72 of the exterior body 12. The control via the light source controller 42B includes control of adjusting the light emission aspect of the light-emitting unit 26 based on the information on the state of the movable portion 72. Accordingly, since the light emission aspect is adjusted in accordance with the state of the movable portion 72 of the exterior body 12, the light L emitted from the light-emitting unit 26 can be made to be close to an intended recognition state as compared to a case in which the light emission aspect is always the same even in a case in which the state of the movable portion 72 is changed.

In addition, in the electronic apparatus 10 according to the third embodiment, the movable portion 72 is the cover member 72A provided at a position facing the light-emitting unit 26 in the exterior body 12. The control via the light source controller 42B includes control of adjusting the light emission amount of the light-emitting unit 26 in accordance with the open/close state of the cover member 72A. Accordingly, since the light emission amount is adjusted in accordance with the opening and closing of the cover member 72A of the exterior body 12, the brightness of the light L emitted from the light-emitting unit 26 can be made to be close to the intended brightness as compared to a case in which the light emission amount is always the same regardless of whether the cover member 72A is opened or closed.

It should be noted that, in the third embodiment, the cover member 72A is described as the movable portion 72, but the present disclosed technology is not limited to this. The movable portion 72 may be, for example, a switch member or the like.

### Fourth Embodiment

In the first embodiment, the form example is described in which the exterior body color information 54 is used as the exterior body information 52 and the adjustment of the light emission aspect is performed based on the exterior body color information 54, but the present disclosed technology is not limited to this. In the fourth embodiment, the exterior body information 52 includes the posture information 82 that is information indicating the posture of the electronic apparatus 10.

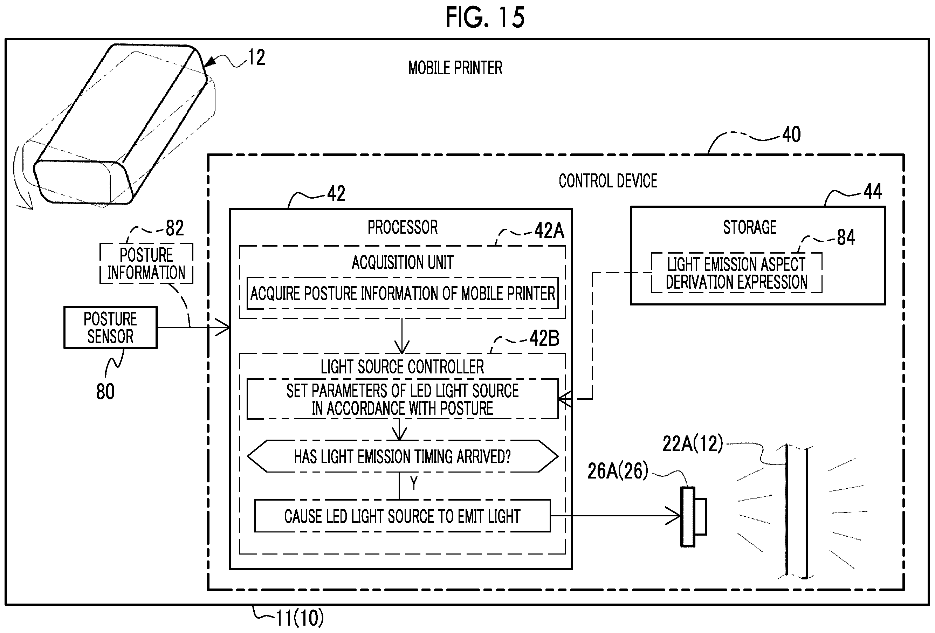

As illustrated in Fig. 15 as an example, the mobile printer 11 comprises a posture sensor 80. The posture sensor 80 detects the posture of the mobile printer 11. Examples of the posture sensor 80 include an inertial sensor and an acceleration sensor. Then, the posture sensor 80 outputs the posture information 82 as the exterior body information 52. That is, in the present embodiment, the exterior body information 52 includes the posture information 82. The posture information 82 is information indicating the posture of the electronic apparatus 10 (here, the mobile printer 11). The posture of the electronic apparatus 10 includes a rotation angle about a center axis in the front-rear direction, the left-right direction, and the up-down direction from a reference position in a case in which the electronic apparatus 10 is placed on a horizontal plane. In addition, the posture of the electronic apparatus 10 includes a movement speed in each of the front-rear direction, the left-right direction, and the up-down direction of the electronic apparatus 10. The posture information 82 is an example of "posture information" according to the present disclosed technology.

In the processor 42, the acquisition unit 42A acquires the posture information 82 from the posture sensor 80. Then, the acquisition unit 42A outputs the posture information 82 to the light source controller 42B.

The light source controller 42B acquires the posture information 82 from the acquisition unit 42A. In addition, the light source controller 42B executes control of adjusting the light emission aspect of the light-emitting unit 26 in accordance with the posture of the mobile printer 11 indicated by the posture information 82.

Specifically, the light source controller 42B executes the control of setting the parameters. More specifically, the light source controller 42B acquires a light emission aspect derivation expression 84 from the storage 44. The light emission aspect derivation expression 84 is an arithmetic expression in which a value indicating the posture (for example, the rotation angle about the XYZ axes) of the electronic apparatus 10 is an independent variable and the parameter value (for example, the duty ratio of the driving pulse or the total light emission time T) is a dependent variable. The light emission aspect derivation expression 84 is obtained, for example, by adjusting the light emission color and the light emission amount in accordance with the posture of the electronic apparatus 10 in a sensory test using an actual machine. It should be noted that, here, although the form example is described in which the parameters are set by using the light emission aspect derivation expression 84, this is merely an example, and a derivation table may be used.

For example, in a case in which the electronic apparatus 10 is upside down, the light emission via the light-emitting unit 26 is stopped. Therefore, it is easy for the user to recognize that the posture of the electronic apparatus 10 is different from the intended posture. In addition, for example, in a case in which the electronic apparatus 10 is inclined, the light emission amount of the LED light sources 26A to 26C is changed in order in accordance with the inclination of the light-emitting unit 26 (for example, the light emission amount is smaller as the inclination goes to the lower side). Accordingly, the operation of the electronic apparatus 10 can be visually performed by the light emission of the light-emitting unit 26, the user can feel fun, and the improvement in the user experience is implemented.

As described so far, in the electronic apparatus 10 according to the fourth embodiment, the exterior body information 52 includes the posture information 82 indicating the posture of the electronic apparatus 10. The control via the light source controller 42B includes control of adjusting the light emission aspect of the light-emitting unit 26 based on the posture information 82. Therefore, since the light emission aspect is adjusted in accordance with the posture of the electronic apparatus 10, the improvement in the user experience is implemented as compared to a case in which the same light emission aspect is always used even in a case in which the posture is changed.

The disclosed technologies in each of the above-described embodiments and the first modification example may be implemented in combination with each other as appropriate.

### Second Modification Example

In the second modification example, in addition to the exterior body information 52 according to each of the above-described embodiments, the exterior body information 52 includes operation state information 86 indicating the operation state of the electronic apparatus 10.

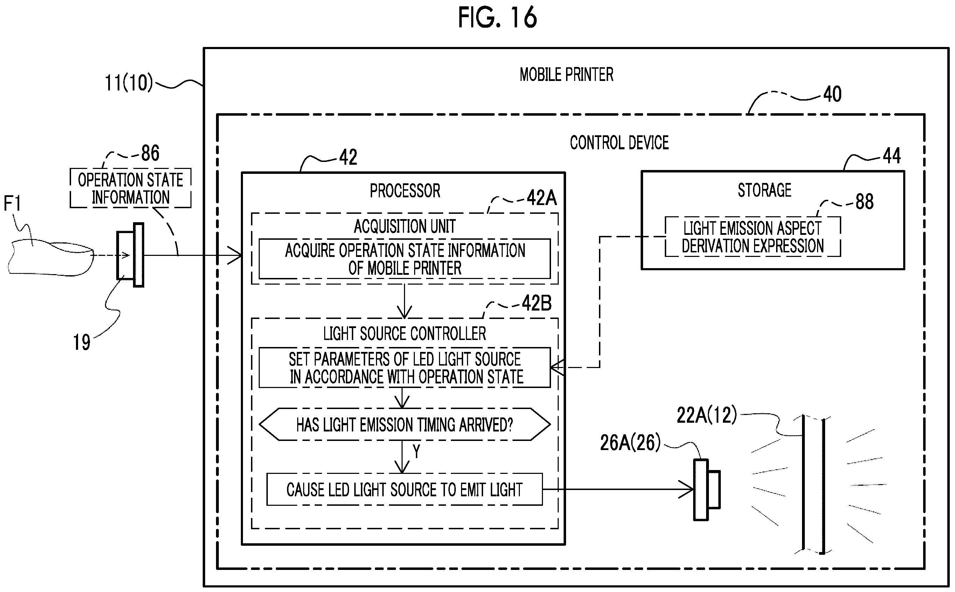

As illustrated in Fig. 16 as an example, it is assumed that the user presses a power button 19 via a finger F1. In such a case, the operation state information 86 is output from the power button 19 to the processor 42. Here, the operation state information 86 is information indicating that the power of the electronic apparatus 10 (here, the mobile printer 11) is turned on. In the present embodiment, the exterior body information 52 includes the operation state information 86. In the processor 42, the acquisition unit 42A acquires the operation state information 86 of the mobile printer 11. Then, the acquisition unit 42A outputs the operation state information 86 to the light source controller 42B. The operation state information 86 is an example of "operation state information" according to the present disclosed technology.

The light source controller 42B acquires the operation state information 86 from the acquisition unit 42A. In addition, the light source controller 42B executes control of adjusting the light emission aspect of the light-emitting unit 26 in accordance with the operation state of the mobile printer 11 indicated by the operation state information 86. Specifically, the light source controller 42B executes control of setting the parameters by using the light emission aspect derivation expression 88. The aspect of the parameter control is the same as the aspect in the fourth embodiment described above, and thus the details thereof will be omitted. It should be noted that, here, although the form example is described in which the parameters are set by using the light emission aspect derivation expression 88, this is merely an example, and a derivation table may be used.

For example, in a case in which the power is turned on, the light-emitting unit 26 emits white light until the activation of the electronic apparatus 10 is completed. Therefore, it is easy for the user to visually recognize that the electronic apparatus 10 is being activated. By visually performing the activation of the electronic apparatus 10 by the light emission of the light-emitting unit 26, the user can feel the fun, and the improvement in the user experience is implemented.

As described so far, in the electronic apparatus 10 according to the second modification example, the exterior body information 52 includes operation state information 86 indicating the operation state of the electronic apparatus 10. The control via the light source controller 42B includes control of adjusting the light emission aspect of the light-emitting unit 26 based on the operation state information 86. Accordingly, since the light emission aspect is adjusted in accordance with the operation state of the electronic apparatus 10, the improvement in the user experience is implemented as compared to a case in which the same light emission aspect is always maintained even in a case in which the operation state is changed.

It should be noted that, in the second modification example, the example is described in which the power is turned on as the operation state of the electronic apparatus 10, but the present disclosed technology is not limited to this. For example, in a case in which the electronic apparatus 10 includes a battery, the remaining capacity of the battery is included in the operation state of the electronic apparatus 10. In such a case, the remaining capacity of the battery may be indicated by the light emission via the light-emitting unit 26. For example, in a case in which the remaining capacity of the battery is equal to or less than the threshold value, the light-emitting unit 26 may emit red light. In addition, in a case in which the electronic apparatus 10 has the printer function, the operation state of the electronic apparatus 10 includes a progress status of the print function. In such a case, the plurality of LED light sources 26A to 26C may be sequentially lighted up along the discharge direction during the discharge of the printed film F. Further, the operation state of the electronic apparatus 10 includes a communication state of the electronic apparatus 10. In such a case, the communication speed of the electronic apparatus 10 may be indicated by the light emission amount via the light-emitting unit 26.

It should be noted that, in each of the above-described embodiments, the form example is described in which the display unit 16 is provided on the upper surface 12A of the exterior body 12, but the present disclosed technology is not limited to this. The display unit 16 may be provided on other surfaces of the exterior body 12. In addition, a plurality of display units 16 may be provided on the front surface of the exterior body 12.

Further, in each of the above-described embodiments, the form example is described in which the transmission suppression layer 30 is formed by printing, but the present disclosed technology is not limited to this. The transmission suppression layer 30 may be formed by attaching a seal member (not illustrated). Specifically, in the first member 22 of the exterior body 12, the seal member is attached to the inner surface 22A1 of the bottom plate portion 22A. The seal member has, for example, a laminated structure and includes a pressure-sensitive adhesive layer, the transmission suppression layer 30, and a coating layer. The seal member is attached to the exterior body 12 via the pressure-sensitive adhesive layer. The transmission suppression layer 30 corresponding to the content shown by the display unit 16 is formed on the pressure-sensitive adhesive layer. The transmission suppression layer 30 contains the material that absorbs the wavelength in the visible light range. Further, the transmission suppression layer 30 is protected by the coating layer. The seal member is attached to form the transmission suppression layer 30 in the region corresponding to the display unit 16. Therefore, the difference in the transmittance of the emission light L emitted from the light-emitting unit 26 is generated between the region corresponding to the display unit 16 and the region on the periphery. As a result, in a case in which the seal member is attached, the transmission suppression layer 30 can be formed, which can contribute to reduction in manufacturing cost of the electronic apparatus 10.

**In** addition, in each of the above-described embodiments, the form example is described in which the three-dimensional shape of the display unit 16 protrudes rather than the periphery, but the present disclosed technology is not limited to this. For example, the three-dimensional shape of the display unit 16 may be a shape that is recessed rather than the periphery, and the periphery may be roughened and the display unit 16 may be a smooth surface.

In addition, in each of the above-described embodiments, the form example is described in which the transmission suppression layer 30 is formed by printing, but the present disclosed technology is not limited to this. For example, the transmission suppression layer 30 may be formed by being partially molded with a resin that is less likely to allow the transmission of the light, or may be formed by attaching a light shielding cover of a separate component to the inside of the exterior body 12.

In addition, in each of the above-described embodiments, the form example is described in which the transmission of the emission light L is suppressed in the region corresponding to the display unit 16, but the present disclosed technology is not limited to this. For example, an aspect may be adopted in which the transmission of the emission light L is promoted in the region corresponding to the display unit 16. Specifically, the transmission suppression layer 30 may be formed in a portion other than the region corresponding to the display unit 16, to promote the transmission of light in the region corresponding to the display unit 16. In this way, the difference in the light transmittance is generated between the region corresponding to the display unit 16 and the periphery.

In addition, in each of the above-described embodiments, the form example is described in which the stripe pattern having the periodic recessed and protruding portions is formed on the front surface of the exterior body 12, but the present disclosed technology is not limited to this. The front surface of the exterior body 12 may have a structure that enhances the designability other than the stripe pattern, or may be a smooth surface.

In addition, in each of the above-described embodiments, the form example is described in which the first member 22 and the second member 24 have a symmetrical shape in a cross-sectional view, but the present disclosed technology is not limited to this. For example, the first member 22 may include the side wall portion 22B, and the second member 24 may be a plate-like member. In such a case, an end surface of the side wall portion 22B is in contact with the peripheral edge of the second member 24.

In addition, in each of the above-described embodiments, the form example is described in which the exterior body 12 has a rectangular parallelepiped shape, but the present disclosed technology is not limited to this. For example, the exterior body 12 may have a square shape, a spherical shape, or a cylindrical shape.

In addition, in each of the above-described embodiments, the form example is described in which the electronic apparatus 10 is the mobile printer 11, but the present disclosed technology is not limited to this. The electronic apparatus 10 may be, for example, a portable electronic apparatus, such as an instant camera, a digital camera, a smartphone, a tablet terminal, a laptop computer, or a mobile battery. In addition, the electronic apparatus 10 may be a stationary electronic apparatus, such as a desktop computer, a printer, a television, or a display.

In addition, in each of the above-described embodiments, the form example is described in which the film F is a so-called instant film containing the photosensitive material, but the present disclosed technology is not limited to this. For example, printing paper containing a heat sensitive material may be used instead of the film F.

In addition, in each of the above-described embodiments, the form example is described in which the light-emitting unit 26 includes the LED light source, but the present disclosed technology is not limited to this. For example, the light-emitting unit 26 may include an organic electro-luminescence (EL) element.

In addition, in each of the above-described embodiments, the form example is described in which the coating film 32 is thick as a whole in the side wall portion 22B, but the present disclosed technology is not limited to this. The coating film 32 on half of the side wall portion 22B on the second member 24 side may be thick.

In addition, in each of the above-described embodiments, the form example is described in which the coating film 32 is thin as a whole in the bottom plate portion 22A, but the present disclosed technology is not limited to this. The coating film 32 may be thin in an elliptical region including the transmission portion 36, or may be thin only in a region corresponding to the transmission portion 36.

In addition, in each of the above-described embodiments, the form example is described in which the substrate 34 of the first member 22 is formed of the translucent material, but the present disclosed technology is not limited to this. For example, the substrate 34 may be the transparent material. However, as described above, it is preferable that the substrate 34 is formed of the translucent material from the viewpoint that the appearance adjustment by the coating film 32 is facilitated.

In addition, in each of the above-described embodiments, the form example is described in which the second member 24 is formed of the resin of the non-transparent material, but the present disclosed technology is not limited to this. For example, the second member 24 may also have a configuration in which a coating film (for example, a coating film containing titanium oxide) is formed on a substrate of the translucent material. However, as described above, it is desirable that the second member 24 is formed of the non-transparent material from the viewpoint that the entry of the external light can be suppressed.

In addition, in each of the above-described embodiments, the form example is described in which the control program 44A is stored in the storage 44, but the present disclosed technology is not limited to this. For example, the control program 44A may be stored in a storage medium (not illustrated), such as an SSD or a universal serial bus (USB) memory. The storage medium is a portable computer-readable non-transitory storage medium. The control program 44A, which is stored in the storage medium, is installed in the electronic apparatus 10. The processor 42 executes the light emission control processing according to the control program 44A.

In addition, the control program 44A may be stored in a storage device of another computer, server, or the like connected to the electronic apparatus 10 via a network, and the control program 44A may be downloaded and installed in the electronic apparatus 10 in response to a request of the electronic apparatus 10. That is, the program (that is, a program product) described in the present embodiment may be provided in a form of the recording medium or may be distributed from an external computer.

Moreover, in the embodiments described above, the processor 42, the storage 44, and the RAM 46 of the electronic apparatus 10 are described as the computer, but the present disclosed technology is not limited to this, and a device including an application specific integrated circuit (ASIC), a field-programmable gate array (FPGA), and/or a programmable logic device (PLD) may be applied instead of the computer. Further, a hardware configuration and a software configuration may be used in combination, instead of the computer.

The following various processors can be used as hardware resources for executing the light emission control processing described in each of the above-described embodiments. Examples of the processor include a CPU that is a general-purpose processor functioning as the hardware resource for executing the processing by executing software, that is, a program. Examples of the processor also include a dedicated electronic circuit that is a processor having a dedicated circuit configuration specially designed to execute specific processing, such as an FPGA, a PLD, or an ASIC. A memory is built in or connected to any processor, and any processor executes the processing by using the memory.

The hardware resource for executing the light emission control processing may be configured by one of these various processors, or may be configured by a combination (for example, a combination of a plurality of FPGAs or a combination of a CPU and an FPGA) of two or more processors of the same type or different types. In addition, the hardware resource for executing the light emission control processing may be one processor.

As a configuring example of one processor, first, there is a form in which one processor is configured by a combination of one or more CPUs and software and the processor functions as the hardware resource for executing the light emission control processing. Second, as represented by system-on-a-chip (SoC), there is a form in which a processor that realizes the functions of the entire system including a plurality of hardware resources for executing the light emission control processing with a single integrated circuit (IC) chip is used. As described above, the light emission control processing is implemented by using one or more of the various processors as the hardware resources.

As the hardware structures of various processors, more specifically, an electronic circuit in which circuit elements, such as semiconductor elements, are combined can be used. Further, the above-described processing is merely an example. Therefore, it goes without saying that unnecessary steps may be deleted, new steps may be added, or the processing order may be changed within a range that does not deviate from the scope.

The above-described contents and the above-illustrated contents are detailed descriptions of portions related to the present disclosed technology, and are merely examples of the present disclosed technology. For example, the description of the configuration, the function, the operation, and the effect are the description of examples of the configuration, the function, the operation, and the effect of the portion according to the present disclosed technology. Therefore, it goes without saying that unnecessary portions may be deleted, new elements may be added, or replacements may be made with respect to the above-described contents and the above-illustrated contents within a range that does not deviate from the scope of the present disclosed technology. Further, the description of, for example, common technical knowledge that does not need to be particularly described to enable the implementation of the present disclosed technology is omitted in the above-described contents and the above-illustrated contents in order to avoid confusion and to facilitate the understanding of the portions related to the present disclosed technology.

In the present specification, "A and/or B" is synonymous with "at least one of A or B". That is, "A and/or B" may mean only A, only B, or a combination of A and B. In the present specification, the same concept as "A and/or B" also applies to a case in which three or more matters are expressed by association with "and/or".

All of the documents, the patent applications, and the technical standards described in the present specification are incorporated into the present specification by reference to the same extent as in a case in which the individual documents, patent applications, and technical standards are specifically and individually noted to be described by reference.

In regard to the embodiment described above, the following supplementary notes will be further disclosed.

### Supplementary Note 1

An electronic apparatus comprising: an exterior body; a light-emitting unit that is provided inside the exterior body and that is configured to emit light to an outside through the exterior body; and a processor, in which the processor acquires exterior body information that is information on a state of the exterior body, and executes control of adjusting a light emission aspect of the light-emitting unit based on the acquired exterior body information.

### Supplementary Note 2

The electronic apparatus according to supplementary note 1, in which the exterior body information includes exterior body color information that is information on a color of the exterior body, and the control includes control of adjusting a light emission color of the light-emitting unit based on the exterior body color information.

### Supplementary Note 3

The electronic apparatus according to supplementary note 1 or 2, in which the exterior body information includes transmitted light color information that is information on a change in a color of the light transmitted through the exterior body, and the control includes control of adjusting a light emission color of the light-emitting unit based on the transmitted light color information.

### Supplementary Note 4

The electronic apparatus according to any one of supplementary notes 1 to 3, in which the exterior body information includes transmitted light intensity information that is information on a change in intensity of the light transmitted through the exterior body, and the control includes control of adjusting a light emission amount of the light-emitting unit based on the transmitted light intensity information.

### Supplementary Note 5

The electronic apparatus according to any one of supplementary notes 1 to 4, in which the processor further acquires ambient light information that is information on ambient light of a periphery of the exterior body, and the control includes control of adjusting the light emission aspect of the light-emitting unit based on the acquired ambient light information.

### Supplementary Note 6

The electronic apparatus according to supplementary note 5, in which the ambient light information includes ambient light intensity information indicating brightness of the periphery of the exterior body, and the control includes control of adjusting a light emission amount of the light-emitting unit based on the ambient light intensity information.

### Supplementary Note 7

The electronic apparatus according to supplementary note 5 or 6, in which the ambient light information includes ambient light color information indicating a color of the ambient light of the periphery of the exterior body, and the control includes control of adjusting a light emission color of the light-emitting unit based on the ambient light color information.

### Supplementary Note 8

The electronic apparatus according to any one of supplementary notes 1 to 7, in which the exterior body information includes information on a state of a movable portion of the exterior body, and the control includes control of adjusting the light emission aspect of the light-emitting unit based on the information on the state of the movable portion.

### Supplementary Note 9

The electronic apparatus according to supplementary note 8, in which the movable portion is a cover member that is provided at a position facing the light-emitting unit in the exterior body, and the control includes control of adjusting a light emission amount of the light-emitting unit in accordance with an open/close state of the cover member.

### Supplementary Note 10

The electronic apparatus according to any one of supplementary notes 1 to 9, in which the exterior body information includes posture information indicating a posture of the electronic apparatus, and the control includes control of adjusting the light emission aspect of the light-emitting unit based on the posture information.

### Supplementary Note 11

The electronic apparatus according to any one of supplementary notes 2 to 10, in which the exterior body information includes operation state information indicating an operation state of the electronic apparatus, and the control includes control of adjusting the light emission aspect of the light-emitting unit based on the operation state information.

### Supplementary Note 12

The electronic apparatus according to any one of supplementary notes 1 to 11, in which a stripe pattern consisting of periodic recessed and protruding portions is formed on a front surface of the exterior body.

### Supplementary Note 13

The electronic apparatus according to any one of supplementary notes 1 to 12, in which the exterior body has a display unit that shows a character, a symbol, and/or a figure by using a difference in a three-dimensional shape with a periphery on a front surface, and the display unit is formed at a position facing the light-emitting unit.

### Supplementary Note 14

The electronic apparatus according to any one of supplementary notes 1 to 13, in which a coating film is formed on an outer side of the exterior body, and a thickness of the coating film in a region through which the light from the light-emitting unit is transmitted is set to be less than a thickness of the coating film in another region.

### Supplementary Note 15

The electronic apparatus according to any one of supplementary notes 1 to 14, in which the light-emitting unit includes an LED light source, and the control includes control of adjusting a light emission aspect of the LED light source.

Explanation of References

## Claims

1. An electronic apparatus (10) comprising:
an exterior body;
a light-emitting unit (26) that is provided inside the exterior body (12) and that is configured to emit light (L) to an outside through the exterior body (12); and
a processor (42),
wherein the processor is configured to:
acquire exterior body information (52) that is information on a state of the exterior body (12), and
execute control of adjusting a light emission aspect of the light-emitting unit (26) based on the acquired exterior body information (52).

2. The electronic apparatus (10) according to claim 1,
wherein the exterior body information (52) includes exterior body color information (58) that is information on a color of the exterior body (12), and
the control includes control of adjusting a light emission color of the light-emitting unit (26) based on the exterior body color information (54).

3. The electronic apparatus (10) according to either claim 1 or claim 2,
wherein the exterior body information (52) includes transmitted light color information (58) that is information on a change in a color of the light (L) transmitted through the exterior body (12), and
the control includes control of adjusting a light emission color of the light-emitting unit (26) based on the transmitted light color information (58).

4. The electronic apparatus (10) according to any one of claims 1 to 3,
wherein the exterior body information (52) includes transmitted light intensity information (60) that is information on a change in intensity of the light (L) transmitted through the exterior body (12), and
the control includes control of adjusting a light emission amount of the light-emitting unit (26) based on the transmitted light intensity information (60).

5. The electronic apparatus (10) according to any one of claims 1 to 4,
wherein the processor (42) is configured to further acquire ambient light information (64) that is information on ambient light of a periphery of the exterior body (12), and
the control includes control of adjusting the light emission aspect of the light-emitting unit (26) based on the acquired ambient light information (64).

6. The electronic apparatus (10) according to claim 5,
wherein the ambient light information (64) includes ambient light intensity information (68) indicating brightness of the periphery of the exterior body (12), and
the control includes control of adjusting a light emission amount of the light-emitting unit (26) based on the ambient light intensity information (68).

7. The electronic apparatus (10) according to either claim 5 or claim 6,
wherein the ambient light information (64) includes ambient light color information (66) indicating a color of the ambient light of the periphery of the exterior body (12), and
the control includes control of adjusting a light emission color of the light-emitting unit (26) based on the ambient light color information (66).

8. The electronic apparatus (10) according to any one of claims 1 to 7,
wherein the exterior body information (52) includes information on a state of a movable portion (72) of the exterior body (12), and
the control includes control of adjusting the light emission aspect of the light-emitting unit (26) based on the information on the state of the movable portion (72).

9. The electronic apparatus (10) according to claim 8,
wherein the movable portion (72) is a cover member (72A) that is provided at a position facing the light-emitting unit (26) in the exterior body (12), and
the control includes control of adjusting a light emission amount of the light-emitting unit (26) in accordance with an open/close state of the cover member (72A).

10. The electronic apparatus (10) according to any one of claims 1 to 9,
wherein the exterior body information (52) includes posture information indicating a posture of the electronic apparatus, and
the control includes control of adjusting the light emission aspect of the light-emitting unit (26) based on the posture information.

11. The electronic apparatus (10) according to any one of claims 1 to 10,
wherein the exterior body information (52) includes operation state information indicating an operation state of the electronic apparatus (10), and
the control includes control of adjusting the light emission aspect of the light-emitting unit (26) based on the operation state information.

12. The electronic apparatus (10) according to any one of claims 1 to 11,
wherein a stripe pattern consisting of periodic recessed and protruding portions is formed on a front surface of the exterior body (12).

13. The electronic apparatus (10) according to any one of claims 1 to 12,
wherein the exterior body (12) has a display unit (16) that shows a character, a symbol, and/or a figure by using a difference in a three-dimensional shape with a periphery on a front surface, and
the display unit (16) is formed at a position facing the light-emitting unit (26).

14. The electronic apparatus (10) according to any one of claims 1 to 13,
wherein a coating film (32) is formed on an outer side of the exterior body (12), and a thickness of the coating film (32) in a region through which the light from the light-emitting unit (26) is transmitted is set to be less than a thickness of the coating film (32) in another region.

15. The electronic apparatus (10) according to any one of claims 1 to 14,
wherein the light-emitting unit (26) includes an LED light source (26A, 26B, 26C), and
the control includes control of adjusting a light emission aspect of the LED light source (26A, 26B, 26C).

16. A control method of an electronic apparatus (10) including an exterior body (12) and a light-emitting unit (26) that is provided inside the exterior body (12) and that is configured to emit light (L) to an outside through the exterior body (12), the control method comprising:
acquiring exterior body information (52) that is information on a state of the exterior body (12); and
executing control of adjusting a light emission aspect of the light-emitting unit (26) based on the acquired exterior body information (52).

17. A storage medium (44) storing a program (44A) of controlling an electronic apparatus (10) including an exterior body (12) and a light-emitting unit (26) that is provided inside the exterior body (12) and that is configured to emit light (L) to an outside through the exterior body (12), the program (44A) executable by a computer (40) to execute a process comprising:
acquiring exterior body information (52) that is information on a state of the exterior body (12); and
executing control of adjusting a light emission aspect of the light-emitting unit (26) based on the acquired exterior body information (52).
